# EUROPEAN PATENT APPLICATION

(11) **EP 4 765 908 A1**
(43) Date of publication of application: **24.06.2026**
(21) Application number: 23948819.0
(22) Date of filing: 15.08.2023
(51) Int. Cl.: H04W 12/02

(54) **AUTHORIZATION METHODS FOR SENSING NODE AND SENSING SERVICE, AND APPARATUS, DEVICE AND MEDIUM**

(71) Applicant: GUANGDONG OPPO MOBILE TELECOMMUNICATIONS CORP., LTD., Dongguan, Guangdong 523860 (CN)
(72) Inventor: XIONG, Lihui, Dongguan, Guangdong 523860 (CN); SHI, Cong, Dongguan, Guangdong 523860 (CN)
(74) Representative: Novagraaf Technologies
(86) International application number: PCT/CN2023/113116
(87) International publication number: WO 2025/035387

(57) **Abstract**

The present application relates to the field of sensing. Disclosed are authorization methods for a sensing node and a sensing service, and an apparatus, a device and a medium. The methods comprise: an authorization method for a sensing node, which method comprises acquiring first subscription information of a sensing node, and authorizing the sensing node on the basis of the first subscription information; and an authorization method for a sensing service, which method comprises acquiring second subscription information of a sensing target, and authorizing a sensing service for the sensing target on the basis of the second subscription information. The methods provided in the present application facilitate authorizing a sensing node on the basis of subscription information of the sensing node/a sensing target, which can protect the privacy of the sensing target and the sensing node and avoid an unauthorized device from participating in a sensing process, thus affecting a sensing result or invading the privacy of the sensing target; and a sensing service for the sensing target is authorized, which can avoid an unauthorized entity from acquiring a sensing result, thus invading the privacy of the sensing target.

## Description

### TECHNICAL FIELD

The present disclosure relates to the field of sensing, and in particular, to methods and apparatuses for authorizing a sensing node, and methods and apparatuses for authorizing a sensing service, and a device and a medium thereof.

### RELATED ART

The integration of wireless sensing and mobile communication to achieve communication services integrated with sensing is one of technologies newly proposed by the 3rd Generation Partnership Project (3GPP). The entire communication system acts as a sensor using an antenna array with a higher frequency range, a wider bandwidth, and a larger scale to achieve high-precision and high-resolution sensing.

For communication services integrated with sensing, the sensing target is expanded from a user equipment (UE) in an original locating service to a UE, an unpowered object, a region, and the like currently, and the sensing information is also expanded from location information in the original locating service to environment features, human body monitoring information, and the like. How to design an authorization mechanism in sensing to ensure privacy security of the sensing target and the sensing node is an urgent problem to be solved at present.

### SUMMARY

Embodiments of the present disclosure provide methods and apparatuses for authorizing a sensing node, and methods and apparatuses for authorizing a sensing service, and a device and a medium thereof. The technical solutions are as follows.

According to an aspect of the present disclosure, a method for authorizing a sensing node is provided. The method is performed by an authorization entity, and includes:
acquiring first subscription information of the sensing node; and
authorizing the sensing node based on the first subscription information.

According to an aspect of the present disclosure, a method for authorizing a sensing node is provided. The method is performed by a sensing initiation entity, and includes:
providing a first sensing node list to an authorization entity, wherein the first sensing node list is used to indicate at least one sensing node, and
the authorization entity is configured to authorize the sensing node based on first subscription information of the sensing node.

According to an aspect of the present disclosure, a method for authorizing a sensing node is provided. The method is performed by a sensing node selection entity, and includes:
providing a second sensing node list to an authorization entity, wherein the second sensing node list is used to indicate at least one sensing node, and
the authorization entity is configured to authorize the sensing node based on first subscription information of the sensing node.

According to an aspect of the present disclosure, a method for authorizing a sensing service is provided. The method is performed by an authorization entity, and includes:
acquiring second subscription information of a sensing target; and
authorizing a sensing service for the sensing target based on the second subscription information.

According to an aspect of the present disclosure, a method for authorizing a sensing service is provided. The method is performed by an authorization entity, and includes:
acquiring second subscription information of a sensing target; and
authorizing a sensing service for the sensing target based on the second subscription information.

According to an aspect of the present disclosure, a method for authorization verification based on sensing is provided. The method is performed by a sensing initiation entity, and includes:
providing an identifier of a sensing target to an authorization entity, wherein the authorization entity is configured to authorize a sensing service for the sensing target based on second subscription information of the sensing target.

According to an aspect of the present disclosure, a method for authorization verification based on sensing is provided. The method is performed by an authorization entity, and includes:
generating an authorization policy for a sensing UE based on second subscription information of the sensing UE.

According to an aspect of the present disclosure, an apparatus for authorization is provided. The apparatus includes:
an acquiring module, configured to acquire first subscription information of a sensing node; and
an authorizing module, configured to authorize the sensing node based on the first subscription information.

According to an aspect of the present disclosure, an apparatus for initiating sensing is provided. The apparatus includes:
a providing module, configured to provide a first sensing node list to an authorization entity, wherein the first sensing node list is used to indicate at least one sensing node, and
the authorization entity is configured to authorize the at least one sensing node based on first subscription information of the at least one sensing node.

According to an aspect of the present disclosure, an apparatus for selecting a sensing node is provided. The apparatus includes:
a providing module, configured to provide a second sensing node list to an authorization entity, wherein the second sensing node list is used to indicate at least one sensing node, and
the authorization entity is configured to authorize the at least one sensing node based on first subscription information of the at least one sensing node.

According to an aspect of the present disclosure, an apparatus for authorization is provided. The apparatus includes:
an acquiring module, configured to acquire second subscription information of a sensing target; and
an authorizing module, configured to authorize a sensing service for the sensing target based on the second subscription information.

According to an aspect of the present disclosure, an apparatus for initiating sensing is provided. The apparatus includes:
a providing module, configured to provide an identifier of a sensing target to an authorization entity, wherein the authorization entity is configured to authorize a sensing service for the sensing target based on second subscription information of the sensing target.

According to an aspect of the present disclosure, an apparatus for authorization verification based on sensing is provided. The apparatus includes:
a generating module, configured to generate an authorization policy for a sensing UE based on second subscription information of the sensing UE.

According to an aspect of the present disclosure, a sensing device is provided. The sensing device includes: a processor and a memory storing one or more programs therein, wherein the sensing device is configured to load and run the one or more programs in the memory to perform the method for authorizing the sensing node, or the method for authorizing the sensing service, or the method for authorization verification based on sensing.

According to an aspect of the present disclosure, a computer-readable storage medium is provided. The computer-readable storage medium stores one or more computer programs therein, wherein the one or more computer programs, when loaded and run by a processor, cause the processor to perform the method for authorizing the sensing node, or the method for authorizing the sensing service, or the method for authorization verification based on sensing.

According to an aspect of the present disclosure, a chip is provided. The chip includes programmable logic circuitry and/or one or more program instructions, wherein the chip, when running, is caused to perform the method for authorizing the sensing node, or the method for authorizing the sensing service, or the method for authorization verification based on sensing.

According to an aspect of the present disclosure, a computer program product or a computer program is provided. The computer program product or a computer program includes one or more computer instructions stored in a computer-readable storage medium, wherein a processor, when reading and executing the one or more computer instructions in the computer-readable storage medium, is caused to perform the method for authorizing the sensing node, or the method for authorizing the sensing service, or the method for authorization verification based on sensing.

The technical solutions according to the embodiments of the present disclosure achieve the following beneficial effects.

A sensing node is authorized based on subscription information of the sensing node/a sensing target, such that the privacy of the sensing target and the sensing node is protected, and an unauthorized device is prevented from participating in a sensing process and thus affecting a sensing result or invading the privacy of the sensing target. A sensing service for the sensing target is authorized, such that an unauthorized entity is prevented from acquiring a sensing result and thus invading the privacy of the sensing target.

### BRIEF DESCRIPTION OF DRAWINGS

To describe the technical solutions in embodiments of the present disclosure more clearly, the following briefly describes the accompanying drawings required for describing the embodiments. Apparently, the accompanying drawings in the following description show merely some embodiments of the present disclosure, and those of ordinary skill in the art may still derive other accompanying drawings from these accompanying drawings without creative efforts.
FIG. 1 is a block diagram of a sensing system according to some exemplary embodiments of the present disclosure;
FIG. 2 is a schematic diagram of eight possible modes related to sensing according to the related art;
FIG. 3 is a schematic structural diagram of a mobile communication system for sensing according to some exemplary embodiments of the present disclosure;
FIG. 4 is a schematic structural diagram of a mobile communication system for sensing according to some exemplary embodiments of the present disclosure;
FIG. 5 is a flowchart of a method for authorizing a sensing node according to some exemplary embodiments of the present disclosure;
FIG. 6 is a flowchart of a method for authorizing a sensing node according to some exemplary embodiments of the present disclosure;
FIG. 7 is a flowchart of a method for authorizing a sensing node according to some exemplary embodiments of the present disclosure;
FIG. 8 is a flowchart of a method for authorizing a sensing node according to some exemplary embodiments of the present disclosure;
FIG. 9 is a flowchart of a method for authorizing a sensing service according to some exemplary embodiments of the present disclosure;
FIG. 10 is a flowchart of a method for authorizing a sensing service according to some exemplary embodiments of the present disclosure;
FIG. 11 is a flowchart of a method for authorizing a sensing service according to some exemplary embodiments of the present disclosure;
FIG. 12 is a flowchart of a method for authorizing a sensing service according to some exemplary embodiments of the present disclosure;
FIG. 13 is a flowchart of a method for authorization according to some exemplary embodiments of the present disclosure;
FIG. 14 is a flowchart of a method for authorization according to some exemplary embodiments of the present disclosure;
FIG. 15 is a flowchart of a method for authorization according to some exemplary embodiments of the present disclosure;
FIG. 16 is a flowchart of a method for authorization according to some exemplary embodiments of the present disclosure;
FIG. 17 is a flowchart of a method for authorization according to some exemplary embodiments of the present disclosure;
FIG. 18 is a flowchart of a method for authorization according to some exemplary embodiments of the present disclosure;
FIG. 19 is a flowchart of a method for authorization according to some exemplary embodiments of the present disclosure;
FIG. 20 is a flowchart of a method for authorization according to some exemplary embodiments of the present disclosure;
FIG. 21 is a flowchart of a method for authorizing according to some exemplary embodiments of the present disclosure;
FIG. 22 is a flowchart of a method for authorization according to some exemplary embodiments of the present disclosure;
FIG. 23 is a flowchart of a method for authorization according to some exemplary embodiments of the present disclosure;
FIG. 24 is a flowchart of a method for authorization according to some exemplary embodiments of the present disclosure;
FIG. 25 is a flowchart of a method for authorization according to some exemplary embodiments of the present disclosure;
FIG. 26 is a flowchart of a method for authorization according to some exemplary embodiments of the present disclosure;
FIG. 27 is a flowchart of a method for authorization according to some exemplary embodiments of the present disclosure;
FIG. 28 is a flowchart of a method for authorization according to some exemplary embodiments of the present disclosure;
FIG. 29 is a flowchart of a method for authorization according to some exemplary embodiments of the present disclosure;
FIG. 30 is a flowchart of a method for authorization according to some exemplary embodiments of the present disclosure;
FIG. 31 is a flowchart of a method for authorization according to some exemplary embodiments of the present disclosure;
FIG. 32 is a flowchart of a method for authorization according to some exemplary embodiments of the present disclosure;
FIG. 33 is a flowchart of a method for authorization according to some exemplary embodiments of the present disclosure;
FIG. 34 is a flowchart of a method for authorization according to some exemplary embodiments of the present disclosure;
FIG. 35 is a flowchart of a method for authorization according to some exemplary embodiments of the present disclosure;
FIG. 36 is a flowchart of a method for authorization according to some exemplary embodiments of the present disclosure;
FIG. 37 is a flowchart of a method for authorization according to some exemplary embodiments of the present disclosure;
FIG. 38 is a flowchart of a method for selecting a sensing node according to some exemplary embodiments of the present disclosure;
FIG. 39 is a structural block diagram of an apparatus for authorization according to some exemplary embodiments of the present disclosure;
FIG. 40 is a structural block diagram of an apparatus for initiating sensing according to some exemplary embodiments of the present disclosure;
FIG. 41 is a structural block diagram of an apparatus for selecting a sensing node according to some exemplary embodiments of the present disclosure;
FIG. 42 is a structural block diagram of an apparatus for authorization according to some exemplary embodiments of the present disclosure;
FIG. 43 is a structural block diagram of an apparatus for initiating sensing according to some exemplary embodiments of the present disclosure;
FIG. 44 is a structural block diagram of an apparatus for authorization verification based on sensing according to some exemplary embodiments of the present disclosure;
FIG. 45 is a structural block diagram of an apparatus for selecting a sensing node according to some exemplary embodiments of the present disclosure; and
FIG. 46 is a schematic structural diagram of a sensing device according to some embodiments of the present disclosure.

### DETAILED DESCRIPTION

For clearer descriptions of the objectives, technical solutions, and advantages of the present disclosure, embodiments of the present disclosure are further described in detail hereinafter with reference to the accompanying drawings. Reference is made in detail to the exemplary embodiments, examples of which are illustrated in the accompanying drawings. When the accompanying drawings are involved in the following description, the same numbers in different accompanying drawings represent the same or similar elements unless otherwise indicated. The embodiments described in the following exemplary embodiments do not represent all embodiments consistent with the present disclosure. Rather, they are merely examples of apparatus and methods consistent with some aspects of the present disclosure, as detailed in the appended claims.

The network architecture and business scenarios described in the embodiments of the present disclosure are intended to describe the technical solutions according to the embodiments of the present disclosure more clearly, but do not constitute a limitation on the technical solutions according to the embodiments of the present disclosure. Those of ordinary skill in the art learn that, with the evolution of the network architecture and the emergence of new business scenarios, the technical solutions according to the embodiments of the present disclosure are also applicable to similar technical problems. The terms used in the present disclosure are for the purpose of describing particular embodiments only and are not intended to limit to the present disclosure. As used in the present disclosure and the appended claims, the singular forms "a," "an," and "the" are intended to include the plural forms as well, unless the context clearly indicates otherwise. It should also be understood that the term "and/or" as used herein refers to and encompasses any or all possible combinations of one or more associated listed items.

It should be understood that although the terms "first," "second," and the like may be used in the present disclosure to describe various pieces of information, such information should not be limited to these terms. These terms are only used to distinguish one type of information from another. For example, without departing from the scope of the present disclosure, a first value may also be referred to as a second value, and similarly, a second value may also be referred to as a first value. The word "if," as used herein, may be interpreted as "in the case where", "in the case of", or "in response to determining that", depending on the context.

Generally, all terms used in the claims are to be interpreted based on their ordinary meaning in the technical field, unless explicitly defined otherwise herein. All references to "an element, apparatus, component, device, step, etc." are to be interpreted openly as referring to at least one instance of the element, apparatus, component, device, step, etc., unless explicitly stated otherwise. The processes of any method disclosed herein do not have to be performed in the exact order disclosed, unless explicitly recited.

It should be understood that in the various embodiments of the present disclosure, the numerical order of the above-mentioned processes does not imply the sequence of execution. The execution order of these processes should be determined by their functions and internal logic, and should not impose any limitation on the implementation of the embodiments of the present disclosure.

Before the technical solutions of the present disclosure are detailed, some background technical knowledge involved in the present disclosure is first explained. As an alternative, the following related technologies may be combined with the technical solutions according to the embodiments of the present disclosure in any manner, all of which fall within the scope of protection of the embodiments of the present disclosure. The embodiments of the present disclosure include at least part of the following content.

Sensing refers to a technology of detecting parameters of a physical environment by using radio waves to implement environmental sensing such as target locating, action recognition, or imaging. Nodes and/or entities participating in sensing include, but are not limited to:
- a sensing transmitter node: a transmitter node of a sensing signal;
- a sensing receiver node: a receiver node of a sensing signal; and
- a sensing node: a general term of the sensing transmitter node and the sensing receiver node, i.e., a node that performs sensing.

In the technical development trend where the frequency spectrum of wireless communication gradually overlaps the frequency spectrum of sensing, the integrated sensing and communication technology combines the two functions of wireless communication and sensing, and the sensing function is achieved using wireless resources of the wireless communication. That is, the sensing service in a larger region may be achieved using a widely deployed cellular network; joint sensing may be performed using a base station and a plurality of terminals to achieve higher sensing precision; and a hardware module for wireless communication may be reused to achieve the sensing function so as to reduce costs. In summary, the integrated sensing and communication technology enables the wireless communication system in the future to have a sensing capability, providing a basis for the development of services such as intelligent transportation systems, smart cities, smart factories, and unmanned aerial vehicles (UAVs) in the future.

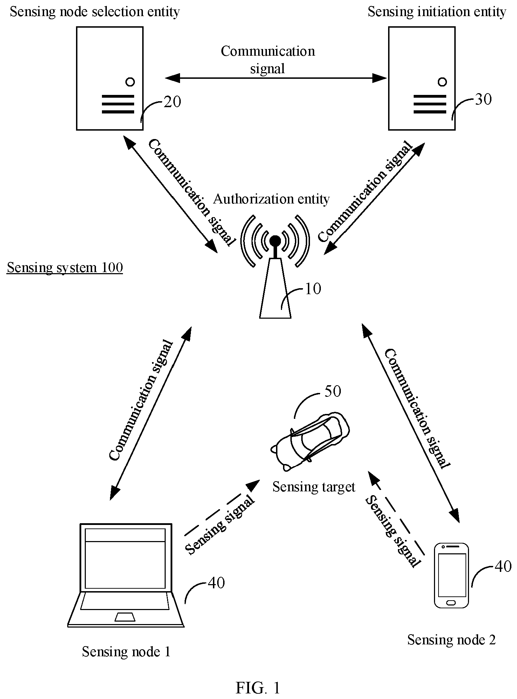

FIG. 1 shows a block diagram of a sensing system 100 according to some exemplary embodiments of the present disclosure. The sensing system 100 includes: an authorization entity 10, a sensing node selection entity 20, a sensing initiation entity 30, one or more sensing nodes 40, and a sensing target 50.

The authorization entity 10 refers to a node that authorizes the sensing process, and may be a base station, a terminal, or a core network element. In some embodiments, the authorization entity 10 is configured to authorize the sensing initiation entity 30. In some embodiments, the authorization entity 10 is configured to authorize the sensing node 40. In some embodiments, the authorization entity 10 is configured to authorize the sensing initiation entity 30 and the sensing node 40.

The sensing node selection entity 20 refers to a communication entity that selects a sensing node, and may be a base station, a terminal, or a core network element. In some embodiments, the sensing node selection entity 20 is configured to select at least one sensing node 40 to assist in sensing.

The sensing initiation entity 30 refers to a communication entity that initiates a sensing service, and may be a base station, a terminal, or a core network element. In some embodiments, the sensing initiation entity 30 initiates a sensing request for the sensing target 50.

The sensing node 40 includes a sensing transmitter node and a sensing receiver node, and may include a base station, a terminal, an Internet of things (IoT) device, or various handheld devices, vehicle-mounted devices, wearable devices, and computing devices with wireless communication functions, or other processing devices connected to wireless modems, as well as various forms of UEs, a mobile station (MS), and the like. A plurality of sensing nodes 20 are usually provided.

The sensing target 50 is a target object that needs to be sensed, and includes a UE, a person, an object, or a region that is to be sensed. For example, in the case where the sensing is applied to monitor an indoor intrusion, the sensing target 50 is an indoor intruder; and in the case where the sensing is applied to measure a vehicle speed, the sensing target 30 is a target vehicle on the road. In the case where the sensing is applied to UAV monitoring, the sensing target 50 is a UAV device.

The authorization entity 10 communicates with the sensing node 40 through a communication signal. For example, the authorization entity 10 issues an authorization result to the sensing node 40, or the authorization entity 10 issues an authorization result to the sensing target 50, and so on.

The authorization entity 10, the sensing node selection entity 20, and the sensing initiation entity 30 communicate with each other through a communication signal.

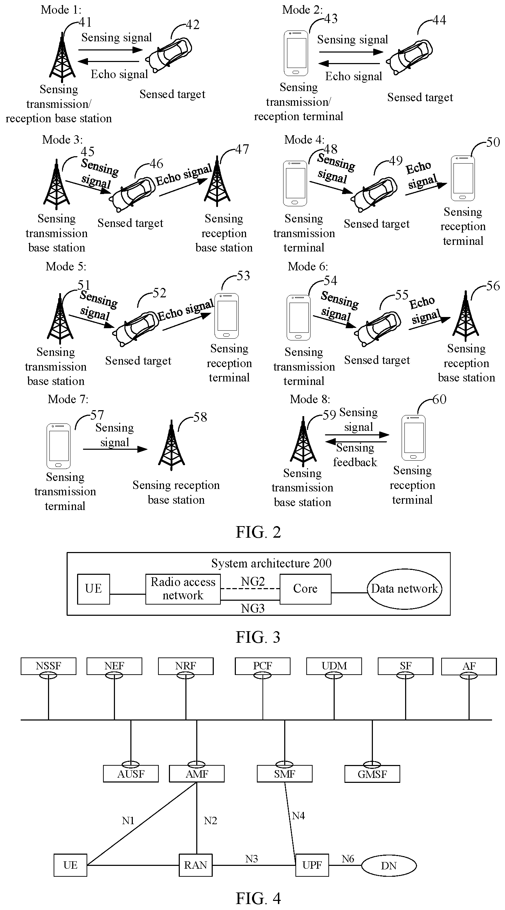

Sensing may be implemented in at least one of the following eight modes. FIG. 2 illustrates eight possible modes related to sensing.

Mode 1: Base station monostatic sensing. In Mode 1, the sensing transmitter node and the sensing receiver node are a same base station 41. That is, the base station 41 transmits a sensing signal to a sensing target 42, and the same base station 41 receives an echo (i.e., a sensing signal reflected by the sensing target) signal upon reflection of the sensing signal from the sensing target 42.

Mode 2: Terminal monostatic sensing. In Mode 2, the sensing transmitter node and the sensing receiver node are a same terminal 43. That is, the terminal 43 transmits a sensing signal to a sensing target 44, and the same terminal 43 receives an echo signal upon reflection of the sensing signal from the sensing target 44.

Mode 3: Base station collaborative sensing. In Mode 3, the sensing transmitter node and the sensing receiver node are different base stations. That is, one base station 45 transmits a sensing signal to a sensing target 46, and another base station 47 receives an echo signal upon reflection of the sensing signal from the sensing target 46.

Mode 4: Terminal collaborative sensing. In Mode 4, the sensing transmitter node and the sensing receiver node in Mode 4 are different terminals. That is, one terminal 48 transmits a sensing signal to a sensing target 49, and another terminal 50 receives an echo signal upon reflection of the sensing signal from the sensing target 49.

Mode 5: Base station-to-terminal collaborative sensing. In Mode 5, the sensing transmitter node is a base station 51, and the sensing receiver node is a terminal 53. That is, the base station 51 transmits a sensing signal to the sensing target 52, and the terminal 50 receives an echo signal upon reflection of the sensing signal from the sensing target 54.

Mode 6: Terminal-to-base station collaborative sensing. In Mode 6, the sensing transmitter node is a terminal 54, and the sensing receiver node is a base station 56. That is, the terminal 54 transmits a sensing signal to the sensing target 55, and the base station receives an echo signal upon reflection of the sensing signal from the sensing target 56.

Mode 7: The sensing target is the sensing transmitter node. In Mode 7, the sensing transmitter node is a terminal 57, and the sensing receiver node is a base station 58. As the sensing target (the terminal 57) is the sensing transmitter node, the sensing signal is transmitted by the sensing transmitter node (the terminal 57) to the sensing receiver node (base station 58) and no reflection is required thereafter. Instead, the base station 58 may directly parse a sensing result upon reception of the sensing signal.

Mode 8: The sensing target is the sensing receiver node. In Mode 8, the sensing transmitter node is the base station 59, while the sensing receiver node is a terminal 60. As the sensing target (the terminal 60) is the sensing receiver node, a sensing result needs to be fed back to the base station 59 upon receiving the sensing signal by the terminal 60, and thus the base station 59 may acknowledge the sensing result.

In the 8 sensing modes illustrated in FIG. 2, the sensing nodes are only represented as single nodes (for example, in Mode 1 and Mode 2, a single node acts as both the sensing transmitter node and the sensing receiver node) or nodes in pairs (for example, from Mode 3 to Mode 8, a pair of different nodes serve as the sensing transmitter node and the sensing receiver node respectively). However, the wireless communication system includes a large number of terminal devices (for example, cellphones and IoT devices), and in a scenario where a plurality of sensing nodes are present around one sensing target (including the sensing transmitter node and the sensing receiver node, i.e., base stations transmitting and/or receiving sensing signals, cellphones, IoT devices, and the like), these plurality of sensing nodes jointly participating in sensing increases the accuracy of the sensing, and provides more comprehensive sensing services by satisfying more complex sensing requirements.

FIG. 3 shows a schematic structural diagram of a mobile communication system 200 according to some exemplary embodiments of the present disclosure. As shown in FIG. 3, the mobile communication system 200 includes: a UE, a radio access network (RAN), a core network (Core), and a data network (DN). The UE, the RAN, and the Core are main components of an architecture. Logically, the UE, the RAN, and the core may be divided into two parts: a user plane and a control plane. The control plane is responsible for management of a mobile network, and the user plane is responsible for transmission of service data. In FIG. 3, the NG2 reference point is located between the RAN control plane and the Core control plane, the NG3 reference point is located between the RAN user plane and the Core user plane, and the NG6 reference point is located between the Core user plane and the data network.

The UE is an entry for interaction between a mobile user and a network, and may provide basic computing and storage capabilities, display a service window to the user, and accept an operation input from the user. The UE establishes a signal connection and a data connection to the RAN using a next-generation air interface technology, thereby transmitting a control signal and service data to the mobile network.

The RAN is similar to a base station in a conventional network, is deployed at a location proximal to the UE, provides a network access function for an authorized user in a specific region, and transmits user data by using transmission channels of different qualities based on a user level, a service requirement, and the like. The RAN is capable of managing its own resources, makes reasonable use of the resources, provides an access service for the UE as required, and forwards a control signal and user data between the UE and the core network.

The Core is responsible for maintaining subscription data of the mobile network, managing network elements of the mobile network, and providing functions such as session management, mobility management, policy management, and security authentication for the UE. In the case where the UE is attached, the Core provides network access authentication for the UE; in the case where the UE has a service request, the Core allocates a network resource for the UE; in the case where the UE moves, the Core updates a network resource for the UE; in the case where the UE is idle, the Core provides a fast recovery mechanism for the UE; in the case where the UE is detached, the Core releases a network resource for the UE; and in the case where the UE has service data, the Core provides a data routing function for the UE, such as forwarding uplink data to a DN, or receiving from the DN downlink data of the UE and forwarding the downlink data to the RAN, thereby transmitting the downlink data to the UE.

The DN is a data network that provides a business service for a user. Generally, a client is disposed in the UE, and a server is disposed in the data network. The data network may be a private network, such as a local area network, or may be an external network that is not controlled by an operator, such as the Internet, or may be a dedicated network jointly deployed by operators, for example, to configure an internet protocol (IP) Multimedia Core Network Subsystem (IMS) service.

FIG. 4 shows a detailed architecture determined based on FIG. 3. A core network user plane includes a user plane function (UPF); and a core network control plane includes an authentication server function (AUSF), an access and mobility management function (AMF), a session management function (SMF), a network slice selection function (NSSF), a network exposure function (NEF), a network repository function (NRF), unified data management (UDM), a policy control function (PCF), a sensing function (SF), an application function (AF), and a gateway mobile sensing center (GMSC). Functions of these function entities are as follows:
The UPF forwards a user data packet according to a routing rule of an SMF;
The AUSF performs security authentication on a UE;
The AMF performs access management and mobility management for the UE;
The SMF performs session management for the UE;
The NSSF selects a network slice for the UE;
The NEF opens a network function to a third party using an API interface;
The NRF provides a storage function and a selection function of network function entity information for other network elements;
The UDM performs management of user subscription context;
The PCF performs user policy management;
The SF has a sensing function, and is responsible for processing sensing data and generating a sensing result;
The AF (disposed in a data network) performs user application management; and
The GMSC isresponsible for the functions related to sensing scenarios.

In some embodiments, the GMSC is also referred to as a gateway mobile sensing function (GMSF).

In the architecture shown in FIG. 4, an N1 interface is a reference point between UE and AMF; an N2 interface is a reference point between RAN and AMF, and is configured to transmit a non-access stratum (NAS) message, and the like; an N3 interface is a reference point between RAN and UPF, and is configured to transmit user plane data, and the like; an N4 interface is a reference point between SMF and UPF, and is configured to transmit information such as channel identification information of the N3 connection, data cache instruction information, and a downlink data notification message; and an N6 interface is a reference point between UPF and DN, and is configured to transmit user plane data, and the like.

It should be noted that the names of the interfaces among the network elements in FIG. 3 and FIG. 4 are only for an example, and the names of the interfaces in the specific implementation may be other names. The embodiments of the present disclosure are not specifically limited thereto. The names of the network elements (such as SMF, AF, and UPF) in FIG. 3 and FIG. 4 are also only for an example, and do not impose limitations on the functions of the network elements themselves. In the 5^{th} generation system (5GS) and other future networks, the foregoing network elements may also have other names. The embodiments of the present disclosure are not specifically limited thereto. For example, in a 6^{th} generation (6G) network, some or all of the above network elements may follow the terms used in 5G, may be given other names, and the like, which are described herein in a unified manner and are not repeated hereinafter. Furthermore, it should be understood that the names of the messages (or signaling) transmitted among the above network elements are also only for an example, and do not impose any limitations on the functions of the messages themselves.

The present disclosure provides an authorization mechanism for a sensing node and/or a sensing service, and the authorization mechanism is implemented based on subscription information. Exemplarily, the present disclosure includes at least one of:
- a uthorizing a sensing node based on subscription information of the sensing node; or
- a uthorizing a sensing service for a sensing target based on subscription information of the sensing target.

### 1. Subscription information of a sensing node:

The subscription information of the sensing node is referred to as first subscription information for short. In some embodiments, the first subscription information includes at least one of:

1) user consent from a first subscriber, and the first subscriber is associated with the sensing node;

The first subscriber is a user associated with the sensing node. For example, the sensing node is mobile phone a, and user b of the mobile phone is a subscriber associated with mobile phone a; or

2) a first privacy profile (UE Sensing privacy profile), and the first privacy profile is a privacy profile for the sensing node.

In some embodiments, the first privacy profile is referred to as a UE sensing privacy profile, a UE privacy profile, a sensing privacy profile, a privacy profile, a profile for the UE, a sensing privacy profile for the UE, or the like. The embodiments of the present disclosure are not specifically limited thereto.

In some embodiments, the first privacy profile includes at least one of:
- a service type;
- a sensing-supported service type;
- an identifier of a sensing initiation entity;
- a role type; or
- sensing-authorized location information.

The service type is used to indicate a sensing service.

The service type is related to the sensing content, and different service types are present based on different sensing conten, for example, a first service type used to sense whether a moving target is present in an environme nt, a second service type used to sense a breathing frequency of a human body, a third service type used to sense a heartbeat rate of a human body, a fourth service type used to sense a posture of a human body, a fifth service type used to sense a UAV, and the like.

The sensing initiation entity is a communication entity that initiates a sensing service. The sensing initiation entity is deployed in at least one of an AF, an network function (NF), a sensing client, or a client UE. The identifier of the sensing initiation entity represents the sensing initiation entity, such as an AF ID, a sensing client ID, and a client UE ID.

The role type is used to indicate a role of the sensing node in the sensing process. Exemplarily, the role type includes, but is not limited to: at least one of a sensing transmitter UE, a sensing receiver UE, a sensing reference UE, a sensing located UE, a sensing assistance UE, a sensing relay UE, a sensing server UE, or a sensing node.

The sensing-authorized location information is used to indicate the region information that the sensing node is authorized to sense.

The above information is all information related to the sensing node.

### 2. Subscription information of a sensing target:

The subscription information of the sensing target is referred to as second subscription information for short. In some embodiments, the sensing target includes at least one of:
- a sensing UE;
- a first user; or
- a sensing area.

### 2.1. Subscription information of a sensing UE:

In some embodiments, the sensing target is a sensing UE, and the second subscription information includes at least one of:
1) user consent from a second subscriber, and the second subscriber is associated with the sensing UE;
   the second subscriber is a user associated with the sensing UE. For example, the sensing UE is mobile phone a, and user b of the mobile phone is a second subscriber associated with mobile phone a; or
2) a second privacy profile (UE Sensing privacy profile), and the second privacy profile is a privacy profile for the sensing UE.

In some embodiments, the second privacy profile is referred to as a UE sensing privacy profile, a UE privacy profile, a sensing privacy profile, a privacy profile, a profile for the UE, a sensing privacy profile for the UE, or the like. The embodiments of the present disclosure are not specifically limited thereto.

In some embodiments, the second privacy profile includes at least one of:
- a service type;
- a sensed service type;
- an identifier of a sensing initiation entity;
- a sensing privacy indication (SPI);
- a privacy type;
- a role type; or
- sensing location information.

The service type is used to indicate a sensing service.

The service type is related to the sensing content, and different service types are present based on different sensing content, for example, a first service type used to sense whether a moving target is present in an environment, a second service type used to sense a breathing frequency of a human body, a third service type used to sense a heartbeat rate of a human body, a fourth service type used to sense a posture of a human body, a fifth service type used to sense a UAV, and the like.

The sensing initiation entity is a communication entity that initiates a sensing service. The sensing initiation entity is deployed in at least one of an AF, an NF, a sensing client, or a client UE. The identifier of the sensing initiation entity represents the sensing initiation entity, such as an AF ID, a sensing client ID, and a client UE ID.

The SPI includes at least one of the following cases: (1) allowing sensing a specific UE (i.e., a current UE); (2) disallowing sensing a specific UE; or (3) a valid time. The valid time is an effective time corresponding to cases (1) or (2). For example, in the case where the indication includes allowing sensing a specific UE and a valid time, the sensing is allowed within the valid time. For another example, in the case where the indication includes disallowing sensing of a specific UE and a valid time, the sensing is disallowed within the valid time.

The privacy type includes: (1) allowing sensing without notifying a user; (2) allowing sensing in the case where the user needs to be notified; (3) allowing sensing in the case where the user needs to be notified and user authentication is acquired; (4) a valid time allowing for being sensed; and (5) a legal geographical location allowing to be sensed. Note: The user here refers to a user associated with the sensing UE.

The role type is used to indicate a role of the sensing UE in the sensing process. Exemplarily, the role type includes, but is not limited to, at least one of a sensing target UE or a sensing UE.

The sensing location information is used to indicate region information that the sensing UE is allowed to be sensed, and includes specific or specified sensing location information.

The above information is all related to the sensing UE.

### 2.2. Subscription information of a first user:

In some embodiments, the sensing target is a first user, and the second subscription information includes at least one of:
1) an identifier of the first user;
2) user consent from the first user; or
3) a third privacy profile, and the third privacy profile is a privacy profile of a UE associated with the first user.

In some embodiments, the third privacy profile is referred to as a UE sensing privacy profile, a UE privacy profile, a sensing privacy profile, a privacy profile, a profile for the UE, a sensing privacy profile for the UE, or the like. The embodiments of the present disclosure are not specifically limited thereto.

In some embodiments, the third privacy profile includes at least one of:
- a service type;
- a sensed service type;
- an identifier of a sensing initiation entity;
- a SPI;
- a privacy type;
- a role type; or
- sensing location information.

The service type is used to indicate a sensing service.

The service type is related to the sensing content, and different service types are present based on different sensing content, for example, a first service type used to sense whether a moving target is present in an environment, a second service type used to sense a breathing frequency of a human body, a third service type used to sense a heartbeat rate of a human body, a fourth service type used to sense a posture of a human body, a fifth service type used to sense a UAV, and the like.

The sensing initiation entity is a communication entity that initiates a sensing service. The sensing initiation entity is deployed in at least one of an AF, an NF, a sensing client, or a client UE. The identifier of the sensing initiation entity represents the sensing initiation entity, such as an AF ID, a sensing client ID, and a client UE ID.

The SPI includes at least one of the following cases: (1) allowing sensing; (2) disallowing sensing; or (3) a valid time. The valid time is an effective time corresponding to cases (1) or (2). For example, in the case where the indication includes allowing sensing and a valid time, the sensing is allowed within the valid time. For another example, in the case where the indication includes disallowing sensing and a valid time, the sensing is disallowed within the valid time.

The privacy type includes: (1) allowing sensing without notifying a user; (2) allowing sensing in the case where the user needs to be notified; (3) allowing sensing in the case where the user needs to be notified and user authentication is acquired; (4) a valid time allowing for being sensed; and (5) a legal geographical location allowing to be sensed. Note: The user here refers to a final sensed user.

The role type is used to indicate a role of the sensing node in the sensing process. Exemplarily, the role type includes, but is not limited to, an assistance UE.

The sensing location information is used to indicate region information that the final user is allowed to be sensed, and includes specific or specified sensing location information.

The above information is all related to the first user.

### 2.3. Subscription information of a sensing area:

In some embodiments, the sensing target is a sensing area, and the second subscription information includes at least one of:
1) an identifier of a second user;
2) user consent from the second user, and the second user is associated with the sensing area. For example, the sensing area is a private region, and the second user is a sensed user in the sensing area. For another example, the sensing area is a private region, and the second user is an owner of the sensing area. For yet another example, the sensing area is a public region, and the second user is a manager of the sensing area. In some embodiments, in the case where the sensing area is a public region, no manager is present, i.e., there is neither (1) nor (2); or
3) a sensing location profile, which is also referred to as a sensing privacy profile of the sensing area.

In some embodiments, the sensing location profile includes at least one of:
- a service type;
- a sensed service type;
- an identifier of a sensing initiation entity;
- a SPI; or
- a privacy type.

The service type is used to indicate a sensing service.

The service type is related to the sensing content, and different service types are present based on different sensing content, for example, a first service type used to sense whether a moving target is present in an environment, a second service type used to sense a breathing frequency of a human body, a third service type used to sense a heartbeat rate of a human body, a fourth service type used to sense a posture of a human body, a fifth service type used to sense a UAV, and the like.

The sensing initiation entity is a communication entity that initiates a sensing service. The sensing initiation entity is deployed in at least one of an AF, an NF, a sensing client, or a client UE. The identifier of the sensing initiation entity represents the sensing initiation entity, such as an AF ID, a sensing client ID, and a client UE ID.

The SPI includes at least one of the following cases: (1) allowing sensing; (2) disallowing sensing; or (3) a valid time. The valid time is an effective time corresponding to cases (1) or (2). For example, in the case where the indication includes allowing sensing and a valid time, the sensing is allowed within the valid time. For another example, in the case where the indication includes disallowing sensing and a valid time, the sensing is disallowed within the valid time.

The privacy type includes: (1) allowing sensing without notifying a user; (2) allowing sensing in the case where the user needs to be notified; (3) allowing sensing in the case where the user needs to be notified and user authentication is acquired; (4) a valid time allowing for being sensed; and (5) a legal geographical location allowing to be sensed. Note: The user here refers to a sensed user of the private region or a manager of the public region.

The above information is all related to the sensing area.

### Authorization for the sensing node:

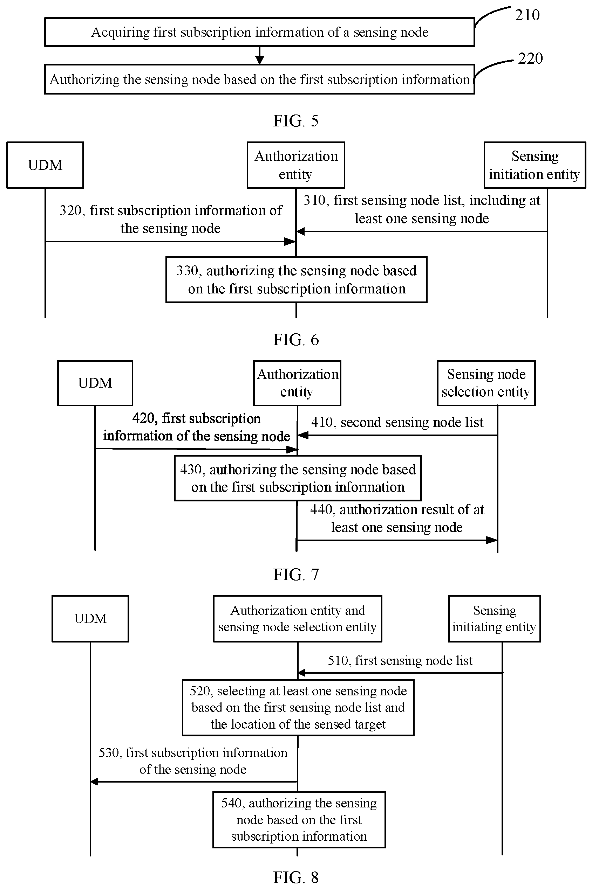

FIG. 5 shows a flowchart of a method for authorizing a sensing node according to some exemplary embodiments of the present disclosure. The method is performed by the authorization entity 10 shown in FIG. 1. The method includes all or part of the following processes.

**S210:** first subscription information of a sensing node is acquired.

**S220:** the sensing node is authorized based on the first subscription information.

The authorization entity determines, based on the first subscription information, whether to authorize the sensing node. In the case where the current sensing satisfies one or more or all pieces of the first subscription information, the sensing node is authorized; and in the case where the current sensing does not satisfy one or more or all pieces of the first subscription information, the sensing node is not authorized.

In some embodiments, the authorization entity authorizes the sensing node in the case where at least one of the following conditions is satisfied:
• user consent from a first subscriber is acquired for the current sensing, and the first subscriber is a user associated with the sensing node;
• a service type of the current sensing is the service type of the first subscription information;
• a service type of the current sensing is the sensing-supported service type in the first subscription information;
• an identifier of a sensing initiation entity of the current sensing is the identifier of the sensing initiation entity in the first subscription information;
• during the current sensing, a role that the sensing node needs to play is the role type in the first subscription information; or
• a location or a region of the current sensing is the location or the region authorized to be sensed in the first subscription information.

In some embodiments, the user consent from the first subscriber is stored in the UDM; in some embodiments, the user consent from the first subscriber is acquired through an application layer; in some embodiments, the user consent from the first subscriber is from the sensing initiation entity; in some embodiments, the user consent from the first subscriber is acquired through the connection between the authorization entity and the sensing node; and in some embodiments, the user consent from the first subscriber is acquired through the connection between the sensing node selection entity and the sensing node. The embodiments of the present disclosure are not limited thereto.

In summary, in the method according to the present disclosure, whether the sensing node performs the sensing is determined based on the first subscription information of the sensing node, and the sensing node is authorized in the case where sensing is allowed. In the case of respecting the willingness of the subscriber of the sensing node and following the first privacy profile pre-stored in the sensing node, whether the sensing node assists this sensing is determind to fully protect the privacy security of the sensing node.

Based on different methods for acquiring the first subscription information of the sensing node, the above implementation of authorizing the sensing node by the authorization entity includes, but is not limited to, at least one of the following three implementations (the order does not represent the superiority or inferiority of the implementations):
first implementation: the first subscription information of the sensing node is acquired based on a first sensing node list;
second implementation: the first subscription information of the sensing node is acquired based on a second sensing node list; or
third implementation: in the case where the authorization entity further acts as the sensing node selection entity, the authorization entity autonomously selects at least one sensing node, and acquires the first subscription information of the sensing node. Descriptions are provided in the following three manners.

### First implementation:

FIG. 6 shows a flowchart of a method for authorizing a sensing node according to some exemplary embodiments of the present disclosure. The method is performed by the authorization entity shown in FIG. 1. The method includes all or part of the following processes.

**In S310,** the authorization entity receives a first sensing node list from the sensing initiation entity, wherein the first sensing node list is used to indicate at least one sensing node.

The authorization entity is a communication entity that authorizes the sensing node. In some embodiments, the authorization entity is deployed in any one of an AMF, a base station, a PCF, an SF, or a GMSC.

The sensing initiation entity is a communication entity that initiates a sensing service. In some embodiments, the sensing initiation entity is deployed in at least one of an AF, an NF, a sensing client, or a client UE.

In some embodiments, in the case where the sensing initiation entity initiates a sensing request, the sensing initiation entity transmits a first sensing node list. The first sensing node list is a list of at least one candidate sensing node requested or recommended by the sensing initiation entity for the current sensing. The first sensing node list is used to indicate at least one sensing node. Exemplarily, the first sensing node list carries an identifier of at least one sensing node.

The sensing initiation entity directly or indirectly provides the first sensing node list to the authorization entity. In some embodiments, the sensing initiation entity provides the first sensing node list to the authorization entity through one or more core network elements. For example, the sensing initiation entity first provides the first sensing node list to the UDM, and then the UDM provides the first sensing node list to the authorization entity.

**In S320,** the authorization entity acquires first subscription information of the sensing node.

In some embodiments, the UDM stores the first subscription information of the sensing node. The authorization entity acquires, from the UDM, first subscription information of one or more or all sensing nodes in the first sensing node list.

The UDM actively or passively provides the first subscription information of the sensing node to the authorization entity. In some embodiments, the UDM transmits the first subscription information of the sensing node to the authorization entity. For example, the UDM simultaneously transmits the first sensing node list and the first subscription information of each sensing node to the authorization entity. In some embodiments, the authorization entity transmits the identifier of the sensing node to the UDM, and the authorization entity receives the first subscription information fed back by the UDM.

In some embodiments, the authorization entity transmits the identifier of the sensing node in the first sensing node list to the UDM, and the UDM queries the first subscription information of the sensing node through the identifier of the sensing node, and feeds back the first subscription information of the sensing node to the authorization entity. The authorization entity receives the first subscription information of the sensing node fed back by the UDM.

In some embodiments, the authorization entity transmits identifiers of all sensing nodes in the first sensing node list to the UDM, and requests subscription information of all the sensing nodes at one time. In some embodiments, the authorization entity transmits identifiers of all sensing nodes in the first sensing node list to the UDM multiple times, requests first subscription information of all the sensing nodes multiple times, and requests first subscription information of part of the sensing nodes each time. The embodiments of the present disclosure are not limited thereto.

**In S330,** the authorization entity authorizes the sensing node based on the first subscription information.

For all or part or each of sensing nodes in the first sensing node list, the authorization entity determines, based on the first subscription information of the sensing node, whether to authorized the sensing node.

Exemplarily, based on the first subscription information of each sensing node, the authorization entity authorizes the sensing node in the case where at least one of the following conditions is satisfied:
- user consent from a subscriber is acquired for the current sensing, and the subscriber is a user associated with the sensing node;
- a service type of the current sensing is the service type of the first subscription information;
- a service type of the current sensing is the sensing-supported service type in the first subscription information;
- an identifier of a sensing initiation entity of the current sensing is the identifier of the sensing initiation entity in the first subscription information;
- during the current sensing, a role that the sensing node needs to play is the role type in the first subscription information; or
- a location or a region of the current sensing is the location or the region authorized to be sensed in the first subscription information.

In summary, in the method according to the present disclosure, the sensing initiating node provides the first sensing node list, queries the first subscription information of the sensing node in the first sensing node list using the UDM, and authorizes the sensing node based on the first subscription information. The first sensing node list is provided by the sensing initiation node.

It should be noted that S310 and S320 may be performed simultaneously, that is, the UDM simultaneously transmits the first sensing node list and the first subscription information of each sensing node in the first sensing node list to the authorization entity. The embodiments of the present disclosure are not limited thereto.

### Second implementation:

FIG. 7 shows a flowchart of a method for authorizing a sensing node according to some exemplary embodiments of the present disclosure. The method is performed by the authorization entity shown in FIG. 1. The method includes all or part of the following processes.

**In S410,** the authorization entity receives a second sensing node list from the sensing node selection entity.

The sensing node selection entity is a communication entity that selects a sensing node. In some embodiments, the sensing node selection entity is deployed in at least one of an SF, an AMF, a PCF, or an AF. For example, the sensing node selection entity is deployed in the AMF, and uses the AMF to select a sensing node required for the current sensing to acquire a second sensing node list. The second sensing node list includes at least one sensing node.

In some embodiments, the second sensing node list is a subset of the first sensing node list. Exemplarily, the sensing node selection entity first acquires the first sensing node list provided by the sensing initiation entity, and selects all or part of the sensing nodes in the first sensing node list as the second sensing node list.

In some embodiments, the sensing node selection entity selects the second sensing node list based on the information of each sensing node and the information of the sensing target. The information of each sensing node includes at least one of the location of each sensing node or first subscription information of each sensing node. The information of the sensing target includes at least one of the location of the sensing target or first subscription information of the sensing target. Exemplarily, the sensing node selection entity selects, based on the location of the sensing target, a sensing node which is located within a preset distance around the sensing target and satisfies the role type required for the current sensing from the first sensing node list as the second sensing node list.

In some embodiments, the information for selecting the sensing node further includes at least one of electric quantity information, a quality of a communication link between the sensing node and the sensing target, a measurement result of a reference signal between the sensing node and the sensing target, a distance between the sensing node and the sensing target, or other information. The embodiments of the present disclosure are not limited thereto.

The sensing node selection entity provides the second sensing node list to the authorization entity. The sensing node selection entity directly or indirectly provides the first sensing node list to the authorization entity. In some embodiments, the sensing node selection entity transmits the second sensing node list to the authorization entity. For example, the sensing node selection entity transmits a request message to the authorization entity, and the request message carries the second sensing node list. The second sensing node list includes an identifier of at least one sensing node.

**In S420,** the authorization entity acquires first subscription information of the sensing node.

In some embodiments, the UDM stores first subscription information of the sensing node. The authorization entity acquires, from the UDM, first subscription information of one or more or all sensing nodes in the second sensing node list.

The UDM actively or passively provides the first subscription information of the sensing node to the authorization entity. In some embodiments, the UDM transmits the first subscription information of the sensing node to the authorization entity. For example, the UDM simultaneously transmits the first sensing node list and the first subscription information of each sensing node in the first sensing node list to the authorization entity. Since the second sensing node list is a subset of the first sensing node list, it is equivalent to acquiring the first subscription information of each sensing node in the second sensing node list. In some embodiments, the authorization entity transmits an identifier of each sensing node in the first/second sensing node list to the UDM, and the authorization entity receives the first subscription information fed back by the UDM.

In some embodiments, the authorization entity transmits the identifier of the sensing node in the second sensing node list to the UDM, and the UDM queries the first subscription information of the sensing node through the identifier of the sensing node, and feeds back the first subscription information of the sensing node to the authorization entity. The authorization entity receives the first subscription information of the sensing node fed back by the UDM.

In some embodiments, the authorization entity transmits identifiers of all sensing nodes in the second sensing node list to the UDM, and requests first subscription information of all the sensing nodes at one time. In some embodiments, the authorization entity transmits identifiers of all sensing nodes in the second sensing node list to the UDM multiple times, requests first subscription information of all the sensing nodes multiple times, and requests first subscription information of part of the sensing nodes each time. The embodiments of the present disclosure are not limited thereto.

It should be noted that it is not excluded that in some embodiments, the sensing node selection node acquires the first subscription information of the sensing node from the UDM, and the sensing node selection node simultaneously transmits the second sensing node list and the first subscription information of each sensing node in the second sensing node list to the authorization entity.

**In S430,** the authorization entity authorizes the sensing node based on the first subscription information.

For all or part or each of sensing nodes in the second sensing node list, the authorization entity determines, based on the first subscription information of the sensing node, whether to authorize the sensing node.

Exemplarily, based on the first subscription information of each sensing node, the authorization entity authorizes the sensing node in the case where at least one of the following conditions is satisfied:
- user consent from a subscriber is acquired during the current sensing, and the subscriber is a user associated with the sensing node;
- a service type of the current sensing is the service type of the first subscription information;
- a service type of the current sensing is the sensing-supported service type in the first subscription information;
- an identifier of a sensing initiation entity of the current sensing is the identifier of the sensing initiation entity in the first subscription information;
- during the current sensing, a role that the sensing node needs to play is the role type in the first subscription information; or
- a location or a region of the current sensing is the location or the region authorized to be sensed in the first subscription information.

**In S440,** the authorization entity transmits an authorization result of at least one sensing node to the sensing node selection entity.

After authorizing the sensing nodes, the authorization entity transmits an authorization result of at least one sensing node to the sensing node selection entity to inform the sensing node selection entity which sensing nodes is used for the current sensing.

In some embodiments, the authorization entity transmits an identifier of an authorized sensing node to the sensing node selection entity, and does not need to transmit an identifier of an unauthorized sensing node. In some embodiments, the authorization entity transmits, to the sensing node selection entity, an identifier of each sensing node in the second sensing node list and instruction information indicating whether the sensing node is authorized. For example, the instruction information is represented by 1 bit. In the case where a value of the instruction information is a first value, the sensing node is authorized; and in the case where the value of the instruction information is a second value, the sensing node is not authorized. The first value is 1, and the second value is 0; or the first value is 0, and the second value is 1.

In some embodiments, the sensing node selection entity receives an authorization result of at least one sensing node from the authorization entity.

In summary, in the method according to the present disclosure, a sensing node is selected by the sensing node selection entity to acquire the second sensing node list, and the sensing node is authorized based on the queried first subscription information of the sensing node in the second sensing node list. Since the second sensing node list is selected by the 3GPP system based on assistance information such as location, electric quantity, and the quality the communication link, the sensing is more accurate.

The sensing node selection entity providing the second sensing node list to the authorization entity in S410 may be implemented as an independent embodiment, and for example, is separately implemented as a method for authorizing a sensing node.

The sensing node selection entity receiving the authorization result of the at least one sensing node from the authorization entity in S440 may be implemented as an independent embodiment, and for example, is separately implemented as a method for authorizing a sensing node.

### Third implementation:

FIG. 8 shows a flowchart of a method for authorizing a sensing node according to some exemplary embodiments of the present disclosure. The method is performed by the authorization entity shown in FIG. 1. The method includes at least one of the following processes.

**In S510,** the authorization entity acquires a first sensing node list from the sensing initiation entity.

In the embodiments, the authorization entity further acts as the sensing node selection entity. Alternatively, the authorization entity and the sensing node selection entity are deployed in a same node or network element.

The first sensing node list is a list of at least one candidate sensing node requested or recommended by the sensing initiation entity for the current sensing. The first sensing node list is used to indicate at least one sensing node. Exemplarily, the first sensing node list carries an identifier of at least one sensing node.

The sensing initiation entity directly or indirectly provides the first sensing node list to the authorization entity. In some embodiments, the first sensing node list is transmitted by the sensing initiation entity to the authorization entity, or the first sensing node list is indirectly transmitted by the UDM to the authorization entity.

In some embodiments, the sensing initiation entity generates a first sensing node list for the current sensing, and the sensing initiation entity transmits the first sensing node list to the authorization entity; alternatively, the sensing initiation entity transmits the first sensing node list to the UDM, and the UDM stores the first sensing node list and then transmits the first sensing node list to the authorization entity.

**In S520,** the authorization entity selects at least one sensing node based on the first sensing node list and the location of the sensing target.

The authorization entity selects, from the first sensing node list, at least one sensing node based on the location of the sensing target to generate a second sensing node list.

In some embodiments, the authorization entity selects, from the first sensing node list, a sensing node which is within a preset distance around the sensing target as the second sensing node list.

In some embodiments, the authorization entity selects the second sensing node list based on the information of each sensing node and the information of the sensing target. The information of each sensing node includes at least one of the location of each sensing node or first subscription information of each sensing node. The information of the sensing target includes at least one of the location of the sensing target or first subscription information of the sensing target.

In some embodiments, the information for selecting the sensing node further includes at least one of electric quantity information, a quality of a communication link between the sensing node and the sensing target, a measurement result of a reference signal between the sensing node and the sensing target, a distance between the sensing node and the sensing target, or other information. The embodiments of the present disclosure are not limited thereto.

For example, the sensing node selection entity selects, based on the location of the sensing target, a sensing node which is locatedwithin a preset distance around the sensing target and satisfies the role type required for the current sensing from the first sensing node list as the second sensing node list. For another example, the first sensing node list is {a, b, c}, the sensing location supported by sensing node a for sensing is range a1, the sensing location supported by sensing node b for sensing is range b1, the sensing location supported by sensing node c for sensing is range c1, the sensing target is located within range d, and range d belongs to range a1 and range c1 but does not belong to range b1. In this case, the authorization entity selects sensing node a and sensing node c as the sensing nodes for the current sensing.

**In S530,** the authorization entity acquires first subscription information of the sensing node.

In some embodiments, the UDM stores first subscription information of the sensing node. The authorization entity acquires, from the UDM, first subscription information of one or more or all sensing nodes in the second sensing node list.

The UDM actively or passively provides the first subscription information of the sensing node to the authorization entity. In some embodiments, the UDM transmits the first subscription information of the sensing node to the authorization entity. For example, the UDM simultaneously transmits the first sensing node list and the first subscription information of each sensing node in the first sensing node list to the authorization entity. Since the second sensing node list is a subset of the first sensing node list, it is equivalent to acquiring the first subscription information of each sensing node in the second sensing node list. In some embodiments, the authorization entity transmits an identifier of each sensing node in the first/second sensing node list to the UDM, and the authorization entity receives the first subscription information fed back by the UDM.

In some embodiments, the authorization entity transmits the identifier of the sensing node in the second sensing node list to the UDM, and the UDM queries the first subscription information of the sensing node through the identifier of the sensing node, and feeds back the first subscription information of the sensing node to the authorization entity. The authorization entity receives the first subscription information of the sensing node fed back by the UDM.

In some embodiments, the authorization entity transmits identifiers of all sensing nodes in the second sensing node list to the UDM, and requests the identifiers for all the sensing nodes at one time. In some embodiments, the authorization entity transmits identifiers of all sensing nodes in the second sensing node list to the UDM multiple times, requests first subscription information of all the sensing nodes multiple times, and requests first subscription information of part of the sensing nodes each time. The embodiments of the present disclosure are not limited thereto.

**In S540,** the authorization entity authorizes the sensing node based on the first subscription information.

For all or part or each of sensing nodes in the second sensing node list, the authorization entity determines, based on the first subscription information of the sensing node, whether to authorize the sensing node.

Exemplarily, based on the first subscription information of each sensing node, the authorization entity authorizes the sensing node in the case where at least one of the following conditions is satisfied:
- user consent from a subscriber is acquired during the current sensing, and the subscriber is a user associated with the sensing node;
- a service type of the current sensing is the service type of the first subscription information;
- a service type of the current sensing is the sensing-supported service type in the first subscription information;
- an identifier of a sensing initiation entity of the current sensing is the identifier of the sensing initiation entity in the first subscription information;
- during the current sensing, a role that the sensing node needs to play is the role type of the first subscription information; or
- a location or a region of the current sensing is the location or the region authorized to be sensed in the first subscription information.

**In** summary, in the method according to the present disclosure, in the case where the authorization entity further acts as the sensing node selection entity, the sensing node selection entity autonomously authorizes at least one sensing node after selecting the at least one sensing node, thereby reducing the quantity of communications between the sensing node selection entity and other entities and saving communication resources between the sensing node selection entity and other entities.

The sensing initiation entity providing the first sensing node list to the authorization entity in S510 may be implemented as an independent embodiment, and for example, is separately implemented as a method for authorizing a sensing node; and the UDM transmitting the first subscription information of the sensing node to the authorization entity in S510 may be implemented as an independent embodiment, and for example, is separately implemented as a method for authorizing a sensing node.

The authorization entity, also as a sensing node generation entity, generating the second sensing node list in S520 may be implemented as an independent embodiment, and for example, is separately implemented as a method for authorizing a sensing node; and S520 may be implemented as an independent embodiment, and for example, is separately implemented as a method for authorizing a sensing node.

### Authorization of a sensing service for a sensing target:

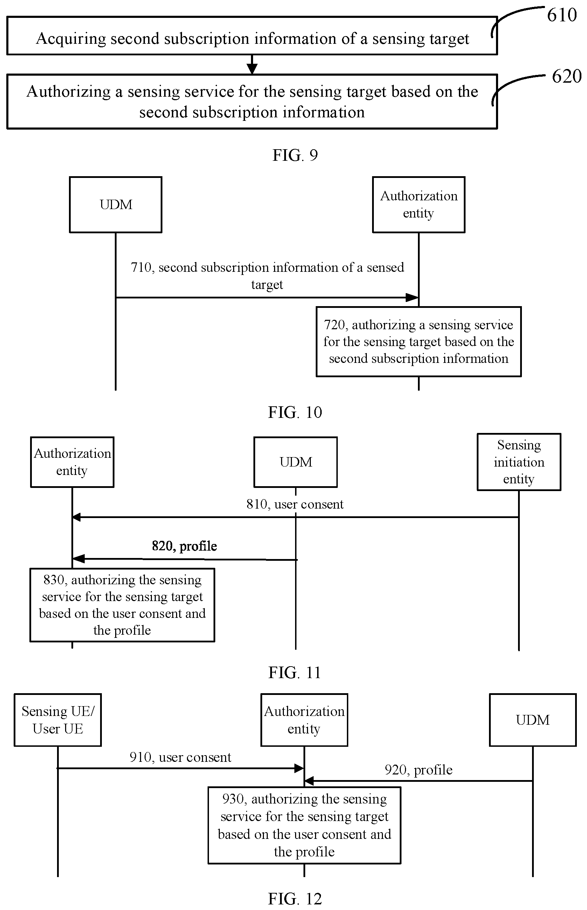

FIG. 9 shows a flowchart of a method for authorizing a sensing service according to some exemplary embodiments of the present disclosure. The method is performed by the authorization entity 10 shown in FIG. 1. The method includes all or part of the following processes.

**S610,** second subscription information of a sensing target is acquired.

**S620,** a sensing service for the sensing target is authorized based on the second subscription information.

The authorization entity determines, based on the second subscription information, whether to authorize the sensing service for the sensing target. In the case where the current sensing satisfies one or more or all pieces of the second subscription information, the sensing service for the sensing target is authorized; and in the case where the current sensing does not satisfy one or more or all pieces of the second subscription information, the sensing service for the sensing target is not authorized.

In some embodiments, the authorization entity authorizes the sensing service for the sensing target in the case where at least one of the following conditions is satisfied:
- user consent is acquired for the current sensing;
- a service type of the current sensing is the service type of the second subscription information;
- a service type of the current sensing is the sensing-supported service type in the second subscription information;
- an identifier of a sensing initiation entity of the current sensing is the identifier of the sensing initiation entity in the second subscription information;
- during the current sensing, a role that the sensing target needs to play is the role type in the second subscription information;
- the SPI in the second subscription information is allowing sensing; or the SPI in the second subscription information is allowing sensing, and the time for the current sensing is within the valid time;
- for the current sensing, a user notification is performed based on the privacy type in the second subscription information;
- for the current sensing, the user verification is performed based on the privacy type in the second subscription information;
- the time for the current sensing is within the valid time in the privacy type of the second subscription information; or
- a location or a region of the current sensing is the location or the region authorized to be sensed in the second subscription information.

In summary, in the method according to the present disclosure, whether to sense the sensing target is determined based on the second subscription information of the sensing target, and a sensing service for the sensing target is authorized in the case where sensing is allowed. In the case of respecting the willingness of the subscriber of the sensing target and following the privacy profile pre-stored in the sensing target, whether to sense the sensing target is determind to fully protect the privacy security of the sensing target.

It can be seen from the foregoing description that the second subscription information includes at least one of user consent or a profile. The profile is usually provided by the UDM. Based on different methods for acquiring the user consent, the above implementation of the authorization entity authorizing the sensing service for the sensing target includes, but is not limited to, at least one of the following three implementations (the order does not represent the superiority or inferiority of the implementations):
fourth implementation: the second subscription information (user consent and/or a profile) is acquired from the UDM;
the second subscription information provided by the UDM is at least one of user consent or a profile. The sensing target is a sensing UE, and the profile is a second privacy profile; or the sensing target is a first user, and the profile is a third privacy profile; or the sensing target is a sensing area, and the profile is a sensing location profile;
fifth implementation: a profile and user consent from the sensing initiation entity are acquired from the UDM; or
sixth implementation: a profile and user consent from the UE are acquired from the UDM.

### Fourth implementation:

FIG. 10 shows a flowchart of a method for authorizing a sensing service according to some exemplary embodiments of the present disclosure. The method is performed by the authorization entity 10 shown in FIG. 1. The method includes all or part of the following processes.

**In S710,** the authorization entity acquires second subscription information of the sensing target from the UDM.

The UDM stores the second subscription information of the sensing target. The authorization entity acquires the second subscription information of the sensing target from the UDM.

The UDM actively or passively provides the second subscription information of the sensing target to the authorization entity. In some embodiments, the UDM transmits second subscription information of the sensing target to the authorization entity. In some embodiments, the authorization entity transmits an identifier of the sensing target to the UDM, and the UDM queries the second subscription information through the identifier of the sensing target and feeds back the second subscription information to the authorization entity. The authorization entity receives the second subscription information fed back by the UDM.

In some embodiments, in the case where a plurality of sensing targets are provided, the authorization entity transmits identifiers of all sensing targets to the UDM, and requests second subscription information of all the sensing targets at one time. In some embodiments, the authorization entity transmits the identifiers of all the sensing targets to the UDM multiple times, requests the second subscription information of all the sensing targets multiple times, and requests second subscription information of part of the sensing targets each time. The embodiments of the present disclosure are not limited thereto.

**In** S720, the authorization entity authorizes the sensing service for the sensing target based on the second subscription information.

The authorization entity determines, based on the second subscription information, whether to authorize the sensing service for the sensing target. In the case where the current sensing satisfies one or more or all pieces of the second subscription information, the sensing service for the sensing target is authorized; and in the case where the current sensing does not satisfy one or more or all pieces of the second subscription information, the sensing service for the sensing target is not authorized.

In some embodiments, the authorization entity authorizes the sensing service for the sensing target in the case where at least one of the following conditions is satisfied:
- user consent is acquired for the current sensing;
- a service type of the current sensing is the service type of the second subscription information;
- a service type of the current sensing is the sensing-supported service type in the second subscription information;
- an identifier of a sensing initiation entity of the current sensing is the identifier of the sensing initiation entity in the second subscription information;
- during the current sensing, a role that the sensing target needs to play is the role type in the second subscription information;
- the SPI in the second subscription information is allowing sensing; or the SPI in the second subscription information is allowing sensing, and the time for the current sensing is within the valid time;
- for the current sensing, a user notification is performed based on the privacy type in the second subscription information;
- for the current sensing, the user verification is performed based on the privacy type of the second subscription information;
- the time for the current sensing is within the valid time in the privacy type of the second subscription information; or
- a location or a region of the current sensing is the location or the region authorized to be sensed in the second subscription information.

In summary, in the method according to the embodiments of the present disclosure, whether to sense the sensing target is determined based on the second subscription information of the sensing target, and the sensing target is authorized in the case where sensing is allowed. In the case of respecting the willingness of the user associated with the sensing target and following the profile pre-stored in the sensing target, whether to sense the sensing target is determind to fully protect the privacy security of the sensing target.

### Fifth implementation:

FIG. 11 shows a flowchart of a method for authorizing a sensing service according to some exemplary embodiments of the present disclosure. The method is performed by the authorization entity 10 shown in FIG. 1. The method includes all or part of the following processes.

**In S810,** the authorization entity acquires user consent provided by the sensing initiation entity.

The sensing initiation entity acquires the user consent in advance.

In some embodiments, in the case where the sensing target is the sensing UE, the sensing initiation entity establishes a connection, such as a transport layer security (TLS) connection, with the sensing UE. The sensing initiation entity acquires user consent from a second subscriber associated with the sensing UE through the TLS connection; and in the case where the sensing target is a first user, the sensing initiation entity establishes a connection, such as a TLS connection, with the user UE. The sensing initiation entity acquires user consent from the first user associated with the user UE through the TLS connection. In the case where the sensing target is the sensing area, the sensing initiation entity establishes a connection, such as a TLS connection, with the user UE of the second user. The sensing initiation entity acquires the user consent from the second user through the TLS connection.

In some embodiments, the sensing initiation entity is deployed in a sensing UE or a user UE, and the sensing initiation entity acquires user consent through an application layer.

After acquiring the user consent, the sensing initiation entity directly or indirectly provides the user consent to the authorization entity. In some embodiments, a connection is established between the sensing initiation entity and the authorization entity, and the user consent is provided to the authorization entity through the connection. In some embodiments, the sensing initiation entity transmits the user consent to one or more core network elements (such as a UDM), and then the one or more core network elements provide the user consent to the authorization entity.

**In S820,** the authorization entity acquires a profile of the sensing target from the UDM.

The UDM stores the profile of the sensing target. The authorization entity acquires the profile of the sensing target from the UDM.

The UDM actively or passively provides the profile of the sensing target to the authorization entity. In some embodiments, the UDM transmits a profile of the sensing target to the authorization entity. In some embodiments, the authorization entity transmits an identifier of the sensing target to the UDM, and the UDM queries the profile through the identifier of the sensing target and feeds back the profile to the authorization entity. The authorization entity receives the profile fed back by the UDM.

In some embodiments, in the case where a plurality of sensing targets are provided, the authorization entity transmits identifiers of all sensing targets to the UDM, and requests profiles of all the sensing targets at one time. In some embodiments, the authorization entity transmits the identifiers of all the sensing targets to the UDM multiple times, requests the profiles of all the sensing targets multiple times, and requests profiles of part of the sensing targets each time. The embodiments of the present disclosure are not limited thereto.

In some embodiments, the sensing initiation entity first transmits the user consent to the UDM, and the UDM provides the user consent and the profile to the authorization entity simultaneously or separately.

**In S830,** the authorization entity authorizes a sensing service for the sensing target based on the user consent and the profile.

The authorization entity determines, based on the user consent and the profile, whether to authorize the sensing service for the sensing target. In the case where the current sensing satisfies one or more or all pieces of the second subscription information, the sensing service for the sensing target is authorized; and in the case where the current sensing does not satisfy one or more or all pieces of the second subscription information, the sensing service for the sensing target is not authorized.

In some embodiments, the authorization entity authorizes the sensing service for the sensing target in the case where at least one of the following conditions is satisfied:
- user consent is acquired for the current sensing;
- a service type of the current sensing is the service type of the profile;
- a service type of the current sensing is the sensing-supported service type in the profile;
- an identifier of a sensing initiation entity of the current sensing is the identifier of the sensing initiation entity in the profile;
- during the current sensing, a role that the sensing target needs to play is the role type of the profile;
- the SPI in the profile is allowing sensing; or the SPI in the profile is allowing sensing, and the time for the current sensing is within the valid time;
- for the current sensing, a user notification is performed based on the privacy type in the profile;
- the time for the current sensing is within the valid time in the privacy type of the profile; or
- a location or a region of the current sensing is the location or the region authorized to be sensed in the profile.

In summary, in the method according to the embodiments of the present disclosure, the user consent is provided through the sensing initiation node. Since the sensing initiation node has acquired the user consent associated with the sensing target in many sensing scenarios, there is no need for the authorization entity to acquire the user consent associated with the sensing target again, thereby reducing the communications between the authorization entity and the sensing target and improving the authorization efficiency of the sensing service.

### Sixth implementation:

FIG. 12 shows a flowchart of a method for authorizing a sensing service according to some exemplary embodiments of the present disclosure. The method is performed by the authorization entity 10 shown in FIG. 1. The method includes all or part of the following processes.

**In S910,** the authorization entity acquires user consent provided by a sensing UE or a user UE.

In some embodiments, in the case where the sensing target is the sensing UE, the authorization entity establishes a connection, such as a NAS connection, with the sensing UE. The authorization entity acquires user consent from a second subscriber associated with the sensing UE through the NAS connection; and in the case where the sensing target is a first user, the authorization entity establishes a connection, such as a NAS connection, with the user UE. The authorization entity acquires user consent from the first user associated with the user UE through the NAS connection. In the case where the sensing target is the sensing area, the authorization entity establishes a connection, such as a NAS connection, with the user UE of the second user. The authorization entity acquires user consent from the second user through the NAS connection.

In some embodiments, the connection established between the authorization entity and the sensing UE is also a user plane connection or an application layer-based connection, and the specific connection mode is related to the selection of the authorization entity. The embodiments of the present disclosure are not limited thereto.

**In** S920, the authorization entity acquires a profile of the sensing target from the UDM.

The UDM stores the profile of the sensing target. The authorization entity acquires the profile of the sensing target from the UDM.

The UDM actively or passively provides the profile of the sensing target to the authorization entity. In some embodiments, the UDM transmits a profile of the sensing target to the authorization entity. In some embodiments, the authorization entity transmits an identifier of the sensing target to the UDM, and the UDM queries the profile through the identifier of the sensing target and feeds back the profile to the authorization entity. The authorization entity receives the profile fed back by the UDM.

In some embodiments, in the case where a plurality of sensing targets are provided, the authorization entity transmits identifiers of all sensing targets to the UDM, and requests profiles of all the sensing targets at one time. In some embodiments, the authorization entity transmits the identifiers of all the sensing targets to the UDM multiple times, requests the profiles of all the sensing targets multiple times, and requests profiles of part of the sensing targets each time. The embodiments of the present disclosure are not limited thereto.

In some embodiments, the sensing initiation entity first transmits the user consent to the UDM, and the UDM provides the user consent and the profile to the authorization entity simultaneously or separately.

**In** S930, the authorization entity authorizes a sensing service for the sensing target based on the user consent and the profile.

The authorization entity determines, based on the user consent and the profile, whether to authorize the sensing service for the sensing target. In the case where the current sensing satisfies one or more or all pieces of the second subscription information, the sensing service for the sensing target is authorized; and in the case where the current sensing does not satisfy one or more or all pieces of the second subscription information, the sensing service for the sensing target is not authorized.

In some embodiments, the authorization entity authorizes the sensing service for the sensing target in the case where at least one of the following conditions is satisfied:
•user consent is acquired for the current sensing;
•a service type of the current sensing is the service type of the profile;
•a service type of the current sensing is the sensing-supported service type in the profile;
•an identifier of a sensing initiation entity of the current sensing is the identifier of the sensing initiation entity in the profile;
•during the current sensing, a role that the sensing target needs to play is the role type of the profile;
•the SPI in the profile is allowing sensing; or the SPI in the profile is allowing sensing, and the time for the current sensing is within the valid time;
•for the current sensing, a user notification is performed based on the privacy type in the profile;
•the time for the current sensing is within the valid time in the privacy type of the profile; or
•a location or a region of the current sensing is the location or the region authorized to be sensed in the profile.

In summary, in the method according to the embodiments of the present disclosure, the authorization node autonomously acquires the user consent, and there is no need for the sensing initiation entity to acquire the user consent, thereby reducing the communications between the sensing initiation entity and the authorization entity, reducing the communications between the sensing initiation entity and the sensing target/user UE, and improving the authorization efficiency of the sensing service.

In some embodiments, at the sensing end stage, the authorization entity or the GMSC needs to provide a sensing result to the sensing initiation entity. In some embodiments, the authorization entity or the GMSC trasnsmits the sensing result to a sensing result requester in the case where the user consent corresponding to the sensing target is acquired; and/or, in some embodiments, the authorization entity or the GMSC trasnsmits the sensing result to the sensing result requester, and information of the sensing target in the sensing result is anonymized. In some embodiments, the sensing result requester is a sensing initiation entity, another entity, or another network element. The embodiments of the present disclosure are not limited thereto.

In some embodiments, the PCF further generates an authorization policy for the sensing UE based on the subscription information of the sensing terminal UE. The authorization policy is used to indicate at least one of:
- a first Public Land Mobile Network (PLMN) that allows the sensing UE to use the sensing service; or
- a second PLMN that allows another UE to use the sensing service for the sensing UE.

Since the sensing target is at least one of the sensing UE, the first user, or the sensing area, and the embodiments of authorizing the sensing service for the sensing target and the embodiments of authorizing the sensing service for the sensing target in the above embodiments may also be combined in pairs, the combinations of different sensing target types and different implementations (not all combinations, only some combinations selected for illustration) are described below.
**I. Authorization of the sensing service for the sensing target in the case where the sensing target is a UE;**
   **for a case where the sensing initiation entity is deployed in the AF/NF/sensing client/client UE, and the authorization entity is deployed in the GMSC, the embodiments of the fifth implementation are as follows:**

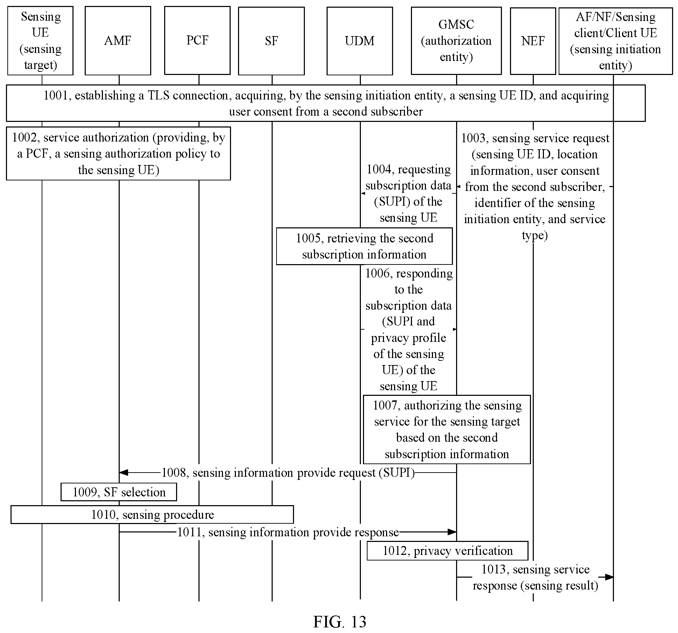

   FIG. 13 shows a flowchart of a method for authorization according to some exemplary embodiments of the present disclosure. In the embodiments, the GMSC is used to authorize the sensing service for the sensing target. The method includes at least one of the following processes.

**In S1001,** the sensing initiation entity establishes a TLS connection with the sensing UE.

The sensing initiation entity is configured to initiate a sensing service for the sensing UE. In some embodiments, the sensing initiation entity acquires an identifier of the sensing UE. In some embodiments, the sensing initiation entity acquires user consent from a second subscriber, for example, the privacy terms before entering the mobile APP.

**In S1002,** service authorization is performed between the sensing UE and the PCF.

In some embodiments, the PCF generates an authorization policy through the subscription information of the sensing UE, and configures the authorization policy for the sensing UE.

In some embodiments, the PCF generates the authorization policy through the second privacy profile of the sensing UE and the user consent that is provided by the sensing initiation entity, and configures the authorization policy for the sensing UE.

In some embodiments, the UE declares its role to the network side. For example, the UE declares that the UE is a sensing target UE, the PCF generates the authorization policy after the PCF checks the second privacy profile of the sensing UE, and configures the authorization policy for the sensing UE.

In some embodiments, the UE declares its role to the network side. For example, the UE declares that it is a sensing target UE, and the PCF generates and configures the authorization policy for the sensing UE after checking the second privacy profile of the sensing UE and the user consent that is provided by the sensing initiation entity.

**In S1003,** the sensing initiation entity transmits a sensing service request to the GMSC.

In some embodiments, the AF/NF/sensing client/client UE transmits a sensing service request to the GMSC.

In some embodiments, the AF/NF/sensing client/client UE transmits a sensing service request to the GMSC through the NEF.

In some embodiments, the sensing service request at least includes a sensing UE identifier (ID). In some embodiments, the sensing service request further includes at least one of the following parameters:
- a sensing initiation entity identifier, used to indicate a unique identifier of the sensing initiation entity, and each sensing initiation entity has a corresponding sensing initiation entity identifier;
- location information, used to indicate region information that the sensing UE is allowed to be sensed, and including specific or specified sensing location information;
- user consent from the second subscriber, the second subscriber is associated with the sensing UE, and the second subscriber is a user associated with the sensing UE. For example, the sensing UE is mobile phone a, and user b of the mobile phone is a second subscriber associated with mobile phone a; or
- a service type, related to the sensing content, and different service types are present based on different sensing content, for example, a first service type used to sense whether a moving target is present in an environment, a second service type used to sense a breathing frequency of a human body, a third service type used to sense a heartbeat rate of a human body, a fourth service type used to sense a posture of a human body, a fifth service type used to sense a UAV, and the like.

**In S1004,** the authorization entity requests second subscription information (Nudm _SDM_GET Request) from the UDM.

In some embodiments, the request message includes a subscription permanent identifier (SUPI). The SUPI is an identifier of the sensing UE.

**In S1005,** the UDM retrieves the second subscription information.

In some embodiments, the UDM retrieves the second privacy profile of the sensing UE based on the SUPI.

**In S1006,** the UDM responds to the authorization entity with second subscription information (Nudm _SDM_GET Response).

In some embodiments, the response message includes the SUPI and the second privacy profile of the sensing UE.

**In S1007,** the authorization entity authorizes the sensing service for the sensing target based on the second subscription information.

In some embodiments, the authorization entity authorizes the sensing service for the sensing target based on the user consent from the second subscriber acquired from the sensing initiation entity.

In some embodiments, the authorization entity authorizes the sensing service for the sensing target based on the second privacy profile of the first user acquired from the UDM.

In some embodiments, the authorization entity authorizes the sensing service for the sensing target based on the user consent from the second subscriber acquired from the sensing initiation entity and the second privacy profile of the first user acquired from the UDM.

**In S1008,** the authorization entity transmits a sensing information provide request (Namf_Sensing _ProvideSensingInfo Request) to the AMF.

In some embodiments, the sensing information provide request carries an SUPI, and the SUPI is an identifier of the sensing UE.

**In S1009,** the AMF performs SF selection.

**In S1010,** a sensing procedure is performed.

In some embodiments, the 5G core network (5GC) and the sensing node perform a sensing procedure for the sensing UE.

In some embodiments, the 5GC includes at least one of the following network elements:
an AMF;
a PCF; or
an SF.

**in S1011,** the AMF transmits a sensing information provide response (Namf_Sensing_ProvideSensingInfo Response) to the GMSC.

The sensing information provide response carries the sensing result. The sensing result is acquired based on sensing measurement of one or more sensing nodes.

**In S1012,** the GMSC performs a privacy verification.

In some embodiments, the GMSC transmits the sensing result to the sensing initiation entity in the case of acquiring the user consent corresponding to the sensing UE.

**In S1013,** the GMSC transmits a sensing service response to the sensing initiation entity.

In some embodiments, the information of the sensing UE in the sensing result is anonymized.

In some embodiments, S1001, S1012, and S1013 are optional.

**For a case where the sensing initiation entity is deployed in the AF/NF/sensing client/client UE, and the authorization entity is deployed in the GMSC, the embodiments of the fifth implementation are as follows:**

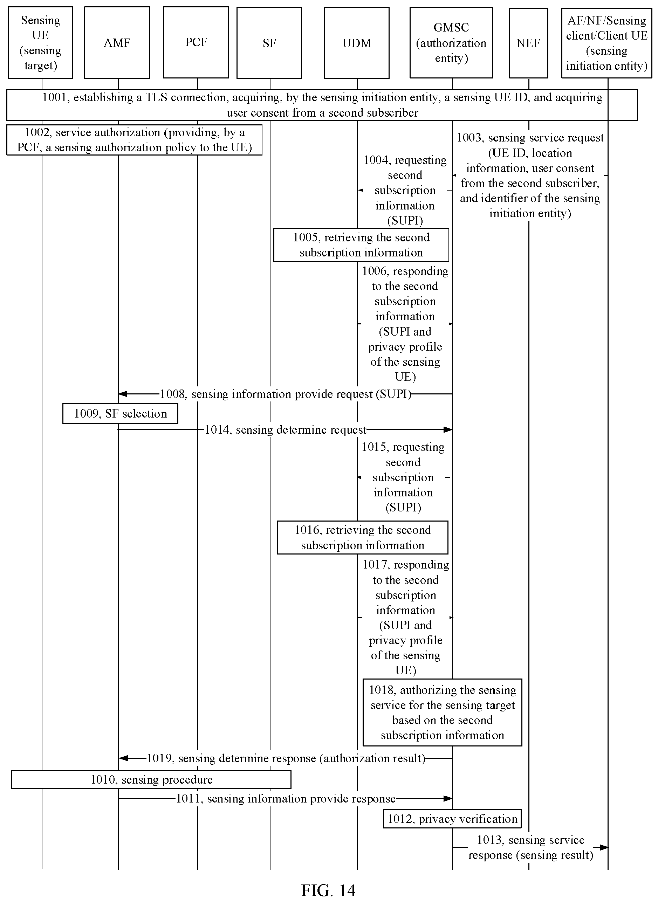

FIG. 14 shows a flowchart of a method for authorization according to some exemplary embodiments of the present disclosure. In the embodiments, the GMSC is used to authorize the sensing service for the sensing target. Different from FIG. 13, in the embodiments, S1007 is deleted, and S1014 to S1019 are added between S1009 and S1010. The method includes at least one of the following processes.

**In S1014,** the AMF transmits a sensing determine request (Nsf_Sensing_DetermineSensing Request) to the GMSC.

**In S1015,** the GMSC requests second subscription information from the UDM.

In some embodiments, the request message includes the SUPI. The SUPI is an identifier of the sensing UE.

**In S1016,** the UDM retrieves the second subscription information.

In some embodiments, the UDM retrieves the second privacy profile of the sensing UE based on the SUPI.

**In S1017,** the UDM responds to the GMSC with second subscription information.

In some embodiments, the response message includes the SUPI and the second privacy profile of the sensing UE.

**In S1018,** the authorization entity authorizes the sensing service for the sensing target based on the second subscription information.

In some embodiments, the authorization entity authorizes the sensing service for the sensing target based on the user consent from the second subscriber acquired from the sensing initiation entity.

In some embodiments, the authorization entity authorizes the sensing service for the sensing target based on the second privacy profile of the sensing UE acquired from the UDM.

In some embodiments, the authorization entity authorizes the sensing service for the sensing target based on the user consent from the second subscriber acquired from the sensing initiation entity and the second privacy profile of the sensing UE acquired from the UDM.

**In S1019,** the authorization entity initiates a sensing determine response (Nsf_Sensing_DetermineSensing Response) to the AMF.

**For a case where the sensing initiation entity is deployed in the AF/NF/sensing client/client UE, and the authorization entity is deployed in the AMF, the embodiments of the fifth implementation are as follows:**

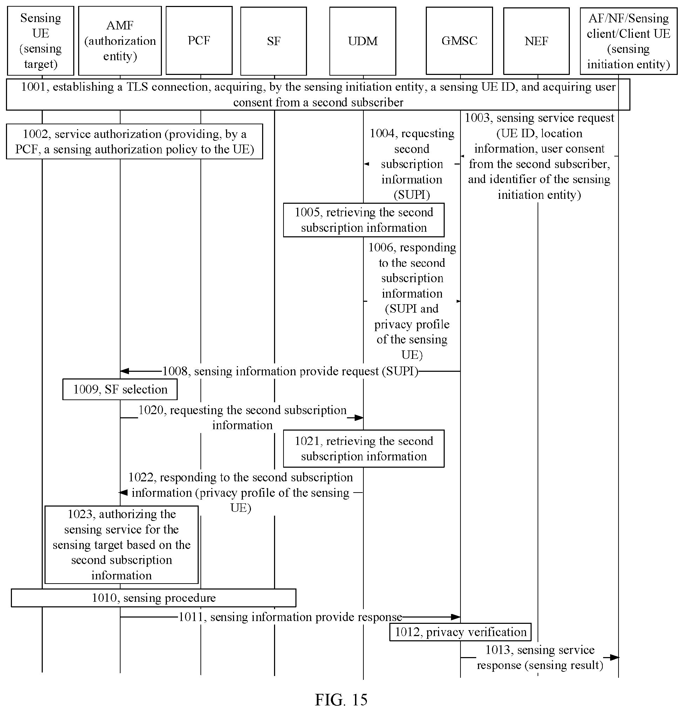

FIG. 15 shows a flowchart of a method for authorization according to some exemplary embodiments of the present disclosure. In the embodiments, the AMF is used to authorize the sensing service for the sensing target. Different from FIG. 13, in the embodiments, S1007 is deleted, and S1020 to S1023 are added between S1009 and S1010. The method includes at least one of the following processes.

**In S1020,** the authorization entity requests second subscription information from the UDM.

In some embodiments, the request message includes the SUPI. The SUPI is an identifier of the sensing UE.

**In S1021,** the UDM retrieves the second subscription information.

In some embodiments, the UDM retrieves the second privacy profile of the sensing UE based on the SUPI.

**In S1022,** the UDM responds to the authorization entity with the second subscription information.

In some embodiments, the response message includes the SUPI and the second privacy profile of the sensing UE.

**In S1023,** the authorization entity authorizes the sensing service for the sensing target based on the second subscription information.

In some embodiments, the authorization entity authorizes the sensing service for the sensing target based on the user consent from the second subscriber acquired from the sensing initiation entity.

In some embodiments, the authorization entity authorizes the sensing service for the sensing target based on the second privacy profile of the sensing UE acquired from the UDM.

In some embodiments, the authorization entity authorizes the sensing service for the sensing target based on the user consent from the second subscriber acquired from the sensing initiation entity and the second privacy profile of the sensing UE acquired from the UDM.

**For a case where the sensing initiation entity is deployed in the AF/NF/sensing client/client UE, and the authorization entity is deployed in the GMSC, the embodiments of the sixth implementation are as follows:**

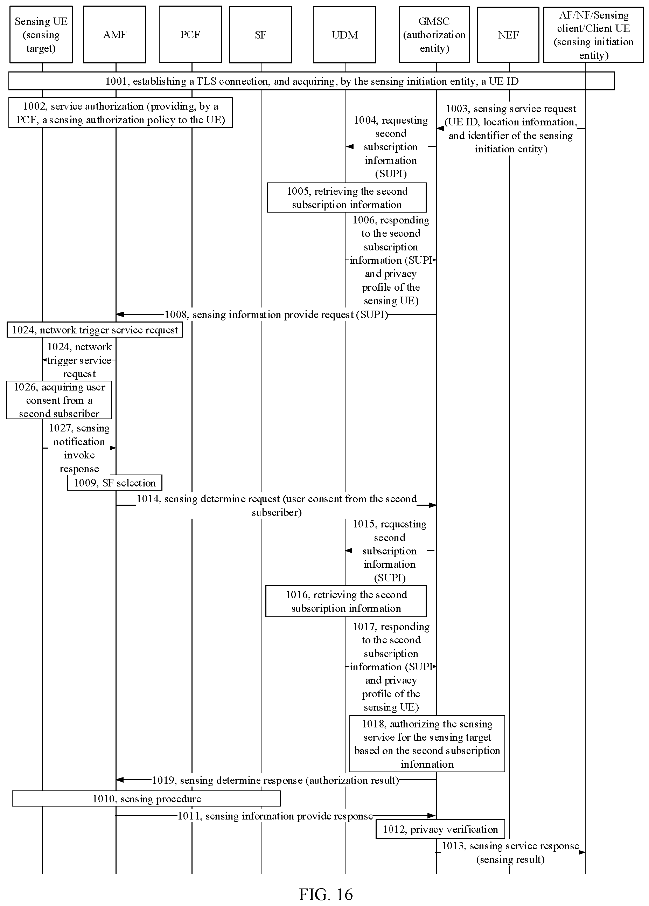

FIG. 16 shows a flowchart of a method for authorization according to some exemplary embodiments of the present disclosure. In the embodiments, the GMSC is used to authorize the sensing service for the sensing target. Different from FIG. 14, in the embodiments, S1007 is deleted, and S1024 to S1027 are added between S1008 and S1009. The method includes at least one of the following processes.

**In S1024,** the AMF transmits a network trigger service request to the sensing UE.

In some embodiments, the AMF establishes a NAS connection with the sensing UE for network communication.

In some embodiments, the authorization entity, such as a GMSC, a base station, a PCF, or an SF, establishes the connection with the sensing UE.

In some embodiments, the PCF establishes a NAS connection with the sensing UE for network communication.

In some embodiments, the GMSC establishes a user plane connection with the sensing UE for network communication.

In some embodiments, the base station establishes an access stratum connection with the sensing UE for network communication.

In some embodiments, the SF establishes a user plane connection or an application layer-based connection with the sensing UE for network communication.

In some embodiments, the connection established between the authorization entity and the sensing UE is also a user plane connection or an application layer-based connection, and the specific connection mode is related to the selection of the authorization entity. The embodiments of the present disclosure are not limited thereto.

**In S1025,** the AMF transmits a sensing notification invoke request to the sensing UE.

In some embodiments, the AMF transmits the sensing notification invoke request to the sensing UE through the NAS connection.

**In S1026,** the sensing UE acquires user consent from the second subscriber.

**In S1027,** the sensing UE transmits a sensing notification invoke response to the AMF.

In some embodiments, the sensing UE transmits a sensing notification invoke response to the AMF through the NAS connection.

In some embodiments, the connection through which the AMF transmits the sensing invoke response is also a user plane connection or an application layer-based connection. A specific connection manner is related to selection of an authorization entity. The embodiments of the present disclosure are not limited thereto.

**For a case where the sensing initiation entity is deployed in the AF/NF/sensing client/client UE, and the authorization entity is deployed in the AMF, the embodiments of the sixth implementation are as follows:**

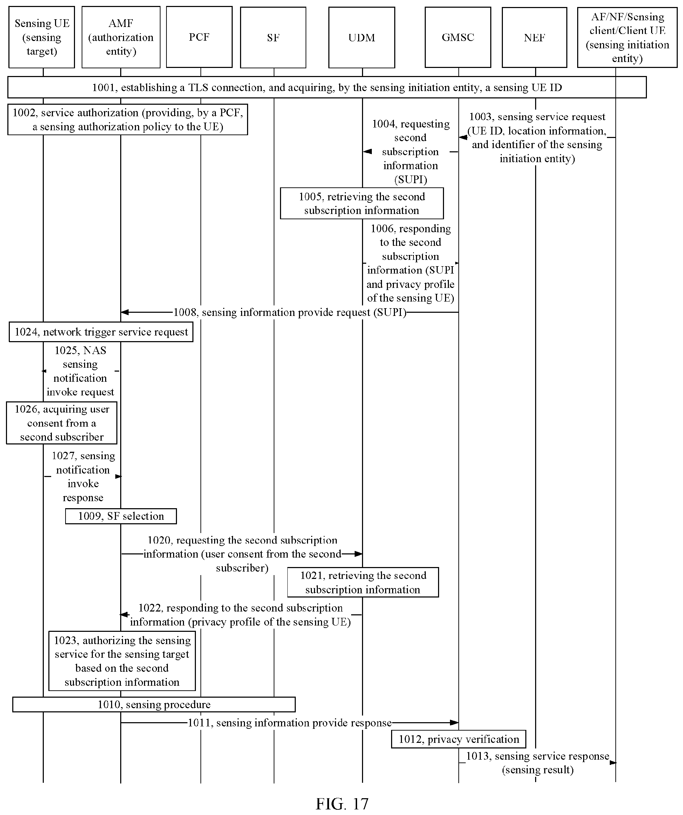

FIG. 17 shows a flowchart of a method for authorization according to some exemplary embodiments of the present disclosure. In the embodiments, the AMF is used to authorize the sensing service for the sensing target. Different from FIG. 15, in the embodiments, S1007 is deleted, and S1024 to S1027 are added between S1008 and S1009. Specific steps are shown in the embodiments shown in FIG. 16.

**For a case where the sensing initiation entity is deployed in the AF/NF/sensing client/client UE, and the authorization entity is deployed in the GMSC, the embodiments of the fourth implementation are as follows:**

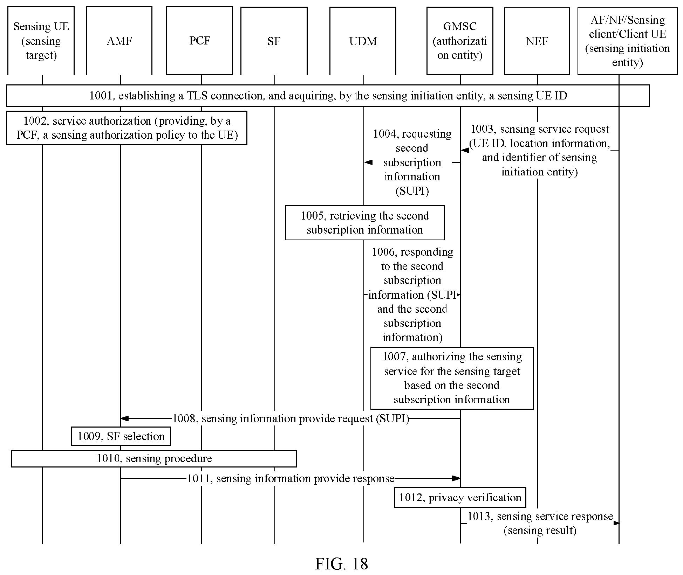

FIG. 18 shows a flowchart of a method for authorization according to some exemplary embodiments of the present disclosure. In the embodiments, the GMSC is used to authorize the sensing service for the sensing target. Different from FIG. 13, in the embodiments, S1005 and S1006 are extended, and the method includes at least one of the following processes.

**In S1005,** the UDM retrieves the second subscription information.

In some embodiments, the UDM retrieves the second privacy profile of the sensing UE based on the SUPI.

In some embodiments, the UDM retrieves the user consent from the second subscriber based on the SUPI.

In some embodiments, the UDM retrieves, based on the SUPI, the second privacy profile of the sensing UE and the user consent from the second subscriber.

**In S1006,** the UDM responds to the authorization entity with the second subscription information.

In some embodiments, the response message includes the SUPI and the second privacy profile of the sensing UE.

In some embodiments, the response message includes the SUPI and the user consent from the second subscriber.

In some embodiments, the response message includes the SUPI, the user consent from the second subscriber, and the second privacy profile of the sensing UE.

**For a case where the sensing initiation entity is deployed in the AF/NF/sensing client/client UE, and the authorization entity is deployed in the GMSC, the embodiments of the fourth implementation are as follows:**

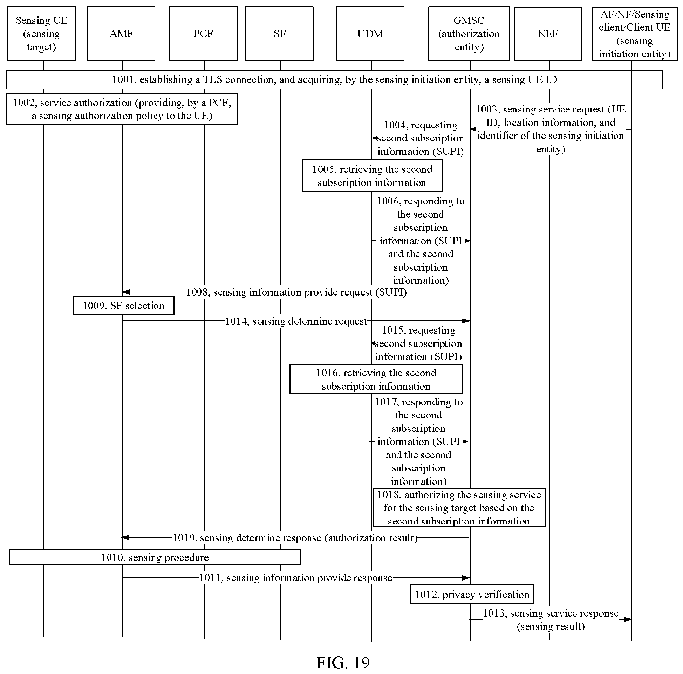

FIG. 19 shows a flowchart of a method for authorization according to some exemplary embodiments of the present disclosure. In the embodiments, the GMSC is used to authorize the sensing service for the sensing target. Different from FIG. 14, in the embodiments, S1005, S1006, S1016, and S1017 are extended, and the method includes at least one of the following processes.

**In S1005,** the UDM retrieves the second subscription information.

In some embodiments, the UDM retrieves the second privacy profile of the sensing UE based on the SUPI.

In some embodiments, the UDM retrieves the user consent from the second subscriber based on the SUPI.

In some embodiments, the UDM retrieves, based on the SUPI, the second privacy profile of the sensing UE and the user consent from the second subscriber.

**In S1006,** the UDM responds to the GMSC with second subscription information.

In some embodiments, the response message includes the SUPI and the second privacy profile of the sensing UE.

In some embodiments, the response message includes the SUPI and the user consent from the second subscriber.

In some embodiments, the response message includes the SUPI, the user consent from the second subscriber, and the second privacy profile of the sensing UE.

**In S1016,** the UDM retrieves the second subscription information.

In some embodiments, the UDM retrieves the second privacy profile of the sensing UE based on the SUPI.

In some embodiments, the UDM retrieves the user consent from the second subscriber based on the SUPI.

In some embodiments, the UDM retrieves, based on the SUPI, the second privacy profile of the sensing UE and the user consent from the second subscriber.

**In S1017,** the UDM responds to the GMSC with second subscription information.

In some embodiments, the response message includes the SUPI and the second privacy profile of the sensing UE.

In some embodiments, the response message includes the SUPI and the user consent from the second subscriber.

In some embodiments, the response message includes the SUPI, the user consent from the second subscriber, and the second privacy profile of the sensing UE.

**For a case where the sensing initiation entity is deployed in the** AF/NF/sensing **client/client UE, and the authorization entity is deployed in the AMF, the embodiments of the fourth implementation are as follows:**

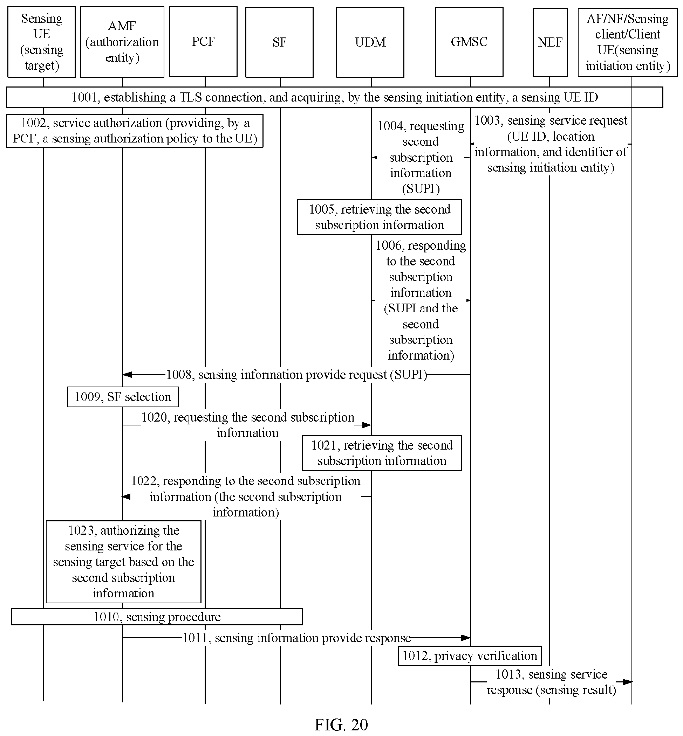

FIG. 20 shows a flowchart of a method for authorization according to some exemplary embodiments of the present disclosure. In the embodiments, the AMF is used to authorize the sensing service for the sensing target. Different from FIG. 15, in the embodiments, S1005, S1006, S1021, and S 1022 are extended, and the method includes at least one of the following processes.

**In S1005,** the UDM retrieves the second subscription information.

In some embodiments, the UDM retrieves the second privacy profile of the sensing UE based on the SUPI.

In some embodiments, the UDM retrieves the user consent from the second subscriber based on the SUPI.

In some embodiments, the UDM retrieves, based on the SUPI, the second privacy profile of the sensing UE and the user consent from the second subscriber.

**In S1006,** the UDM responds to the AMF with second subscription information.

In some embodiments, the response message includes the SUPI and the second privacy profile of the sensing UE.

In some embodiments, the response message includes the SUPI and the user consent from the second subscriber.

In some embodiments, the response message includes the SUPI, the user consent from the second subscriber, and the second privacy profile of the sensing UE.

**In S1021,** the UDM retrieves the second subscription information.

In some embodiments, the UDM retrieves the second privacy profile of the sensing UE based on the SUPI.

In some embodiments, the UDM retrieves the user consent from the second subscriber based on the SUPI.

In some embodiments, the UDM retrieves, based on the SUPI, the second privacy profile of the sensing UE and the user consent from the second subscriber.

**In S1022,** the UDM responds to the AMF with second subscription information.

In some embodiments, the response message includes the SUPI and the second privacy profile of the sensing UE.

In some embodiments, the response message includes the SUPI and the user consent from the second subscriber.

In some embodiments, the response message includes the SUPI, the user consent from the second subscriber, and the second privacy profile of the sensing UE.

**In a case where the sensing initiation entity is deployed in the sensing UE, it is considered that the user consent is acquired, and there is no need to authorize the sensing initiation node.**
**II. Authorization of the sensing service for the sensing target in the case where the sensing target is a first user;**
**in the case where the sensing target is the first user, a UE used by the first user** may be **required to assist in acquiring the second subscription information.**

**For a case where the sensing initiation entity is deployed in the AF/NF/sensing client/client UE, and the authorization entity is deployed in the GMSC, the embodiments of** the **fifth implementation are as follows:**

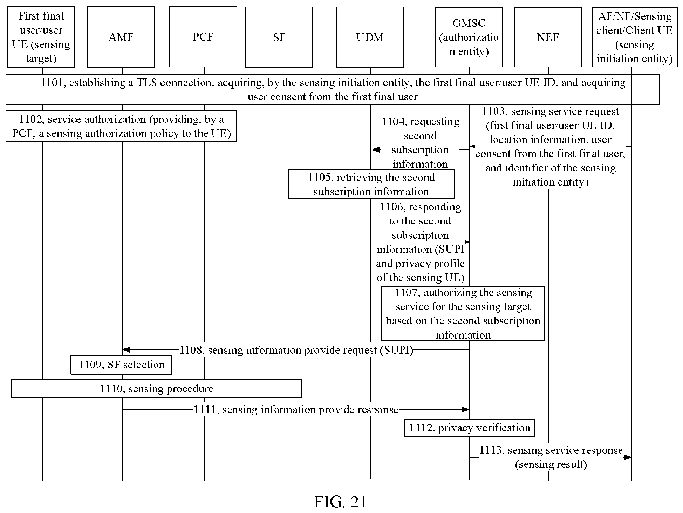

FIG. 21 shows a flowchart of a method for authorization according to some exemplary embodiments of the present disclosure. In the embodiments, the GMSC is used to authorize the sensing service for the sensing target. The method includes at least one of the following processes.

**In S1101,** the sensing initiation entity establishes a TLS connection with a user UE.

The user UE is a UE associated with the first user.

The sensing initiation entity is configured to initiate a sensing service for the first user/user UE. In some embodiments, the sensing initiation entity acquires an identifier of the first user/user UE. In some embodiments, the sensing initiation entity acquires user consent from the first user, for example, the privacy terms before entering the mobile APP.

**In S1102,** service authorization is performed between the first user/user UE and the PCF.

In some embodiments, the PCF generates the authorization policy through the second subscription information of the first user, and configures the authorization policy for the user UE.

In some embodiments, the PCF generates an authorization policy through a third privacy profile of the first user and the user consent from the first user, and configures the authorization policy to the user UE.

In some embodiments, the UE declares its role to the network side. For example, the UE declares that the UE is a sensing target UE, and the PCF generates the authorization policy after the PCF checks the third privacy profile of the user UE, and configures the authorization policy for the sensing UE.

In some embodiments, the UE declares its role to the network side. For example, the UE declares that it is a sensing target UE, and the PCF generates the authorization policy after the PCF checks the third privacy profile of the user UE and the user consent from the first user, and configures the authorization policy for the sensing UE.

**In S1103,** the sensing initiation entity transmits a sensing service request to the GMSC.

In some embodiments, the AF/NF/sensing client/client UE transmits a sensing service request to the GMSC.

In some embodiments, the AF/NF/sensing client/client UE transmits a sensing service request to the GMSC through the NEF.

In some embodiments, the sensing service request at least includes: a first user ID and/or a user UE ID. In some embodiments, the sensing service request further includes at least one of the following parameters:
- a sensing initiation entity identifier, used to indicate a unique identifier of the sensing initiation entity, and each sensing initiation entity has a corresponding sensing initiation entity identifier;
- location information, used to indicate region information that the user UE is allowed to be sensed, and including specific or specified sensing location information;
- user consent from the first user, the first user is associated with the user UE; and for example, the user UE is a UE used by the first user; or
- a service type, related to the sensing content, and different service types are present based on different sensing content, for example, a first service type used to sense whether a moving target is present in an environment, a second service type used to sense a breathing frequency of a human body, a third service type used to sense a heartbeat rate of a human body, a fourth service type used to sense a posture of a human body, a fifth service type used to sense a UAV, and the like.

**In S1104,** the authorization entity requests second subscription information from the UDM.

In some embodiments, the request message includes the SUPI. The SUPI is an identifier of the first user and/or the user UE.

**In S1105,** the UDM retrieves the second subscription information.

In some embodiments, the UDM retrieves the third privacy profile of the first user based on the SUPI.

**In S1106,** the UDM responds to the authorization entity with the second subscription information.

In some embodiments, the response message includes the SUPI and the third privacy profile of the first user.

**In S1107,** the authorization entity authorizes the sensing service for the sensing target based on the second subscription information.

In some embodiments, the authorization entity authorizes the sensing service for the sensing target based on the user consent from the first user acquired from the sensing initiation entity.

In some embodiments, the authorization entity authorizes the sensing service for the sensing target based on the third privacy profile of the first user acquired from the UDM.

In some embodiments, the authorization entity authorizes the sensing service for the sensing target based on the user consent from the first user acquired from the sensing initiation entity and the third privacy profile of the first user acquired from the UDM.

**In S1108,** the authorization entity transmits a sensing information provide request to the AMF.

In some embodiments, the sensing information provide request carries an SUPI, and the SUPI is a first user ID and/or an identifier of a user UE.

**In S1109,** the AMF performs SF selection.

**In S1110, a** sensing procedure is performed.

In some embodiments, the 5GC and the sensing node perform a sensing procedure for the user UE.

In some embodiments, the 5GC includes at least one of the following network elements:
AMF;
PCF; or
SF.

**In S1111,** the AMF transmits a sensing information provide response to the GMSC.

The sensing information provide response carries the sensing result. The sensing result is acquired based on sensing measurement of one or more sensing nodes.

**In S1112,** the GMSC performs a privacy verification.

In some embodiments, the GMSC transmits the sensing result to the sensing initiation entity in the case of acquiring the user consent from the first user.

**In S1113,** the GMSC transmits a sensing service response to the sensing initiation entity.

In some embodiments, the information of the first user/user UE in the sensing result is anonymized.

In some embodiments, S1101, S1112, and S1113 are optional.

**For a case where the sensing initiation entity is deployed in the AF/NF/sensing client/client UE, and the authorization entity is deployed in the GMSC, the embodiments of the fifth implementation are as follows:**

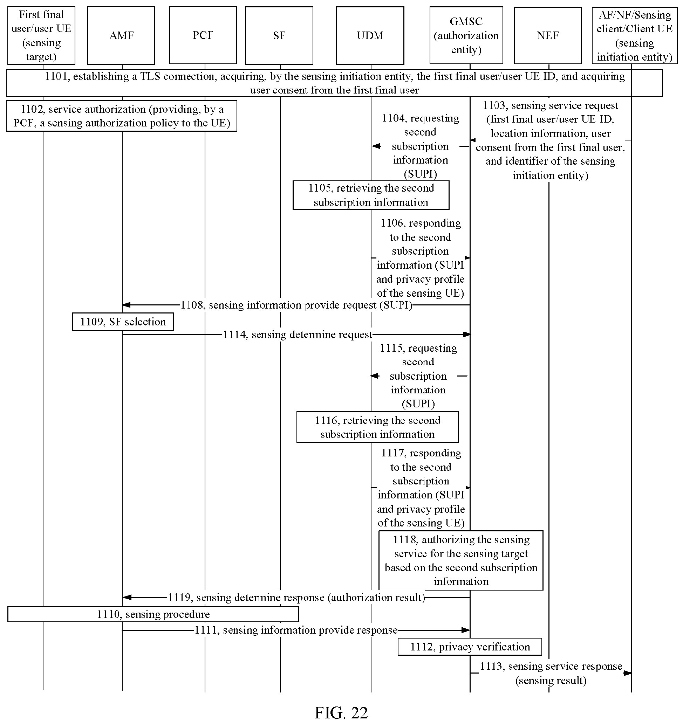

FIG. 22 shows a flowchart of a method for authorization according to some exemplary embodiments of the present disclosure. In the embodiments, the GMSC is used to authorize the sensing service for the sensing target. Different from FIG. 21, In the embodiments, S1107 is deleted, and S1114 to S1119 are added between S1109 and S1110. The method includes at least one of the following processes.

**In S1114,** the AMF transmits a sensing determine request to the authorization entity.

**In S1115,** the authorization entity requests second subscription information from the UDM.

In some embodiments, the request message includes the SUPI. The SUPI is an identifier of the user UE.

**In S1116,** the UDM retrieves the second subscription information.

In some embodiments, the UDM retrieves the third privacy profile of the first user based on the SUPI.

**In S1117,** the UDM responds to the authorization entity with the second subscription information.

In some embodiments, the response message includes the SUPI and the third privacy profile of the first user.

**In S1118,** the authorization entity authorizes the sensing service for the sensing target based on the second subscription information.

In some embodiments, the authorization entity authorizes the sensing service for the sensing target based on the user consent from the first user acquired from the sensing initiation entity.

In some embodiments, the authorization entity authorizes the sensing service for the sensing target based on the third privacy profile of the user UE acquired from the UDM.

In some embodiments, the authorization entity authorizes the sensing service for the sensing target based on the user consent from the first user acquired from the sensing initiation entity and the third privacy profile of the user UE acquired from the UDM.

**In S1119,** the authorization entity initiates a sensing determine response to the AMF.

**For a case where the sensing initiation entity is deployed in the AF/NF/sensing client/client UE, and the authorization entity is deployed in the AMF, the embodiments of the fifth implementation are as follows:**

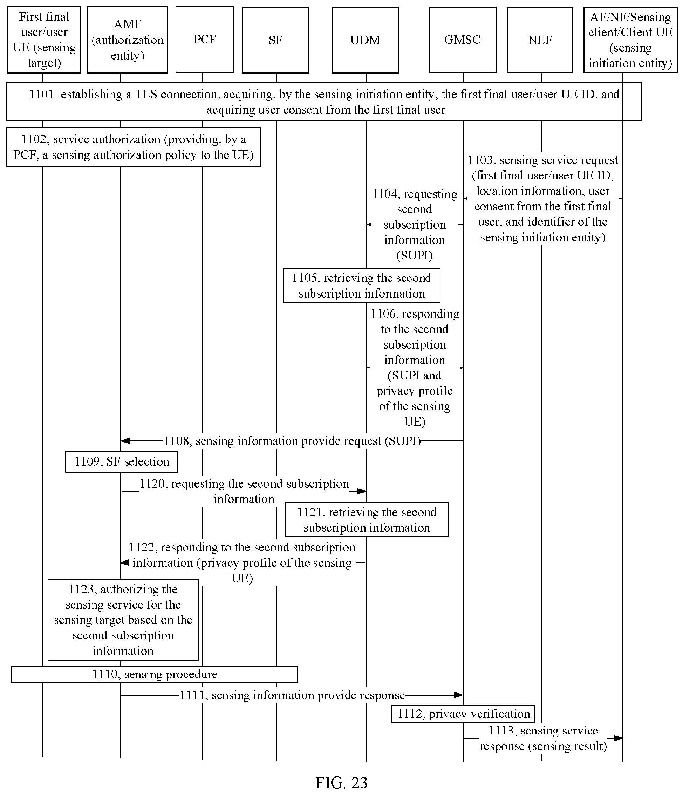

FIG. 23 shows a flowchart of a method for authorization according to some exemplary embodiments of the present disclosure. In the embodiments, the AMF is used to authorize the sensing service for the sensing target. Different from FIG. 21, In the embodiments, S1107 is deleted, and S1120 to S1123 are added between S1109 and S1110. The method includes at least one of the following processes.

**In S1120,** the authorization entity requests second subscription information from the UDM.

In some embodiments, the request message includes the SUPI. The SUPI is an identifier of the user UE.

**In S1121,** the UDM retrieves the second subscription information.

In some embodiments, the UDM retrieves a third privacy profile of the user UE based on the SUPI.

**In S1122,** the UDM responds to the authorization entity with the second subscription information.

In some embodiments, the response message includes the SUPI and the third privacy profile of the user UE.

**In S1123,** the authorization entity authorizes the sensing service for the sensing target based on the second subscription information.

In some embodiments, the authorization entity authorizes the sensing service for the sensing target based on the user consent from the first user acquired from the sensing initiation entity.

In some embodiments, the authorization entity authorizes the sensing service for the sensing target based on the third privacy profile of the user UE acquired from the UDM.

In some embodiments, the authorization entity authorizes the sensing service for the sensing target based on the user consent from the first user acquired from the sensing initiation entity and the third privacy profile of the user UE acquired from the UDM.

**For a case where the sensing initiation entity is deployed in the AF/NF/sensing client/client UE, and the authorization entity is deployed in the GMSC, the embodiments of the sixth implementation are as follows:**

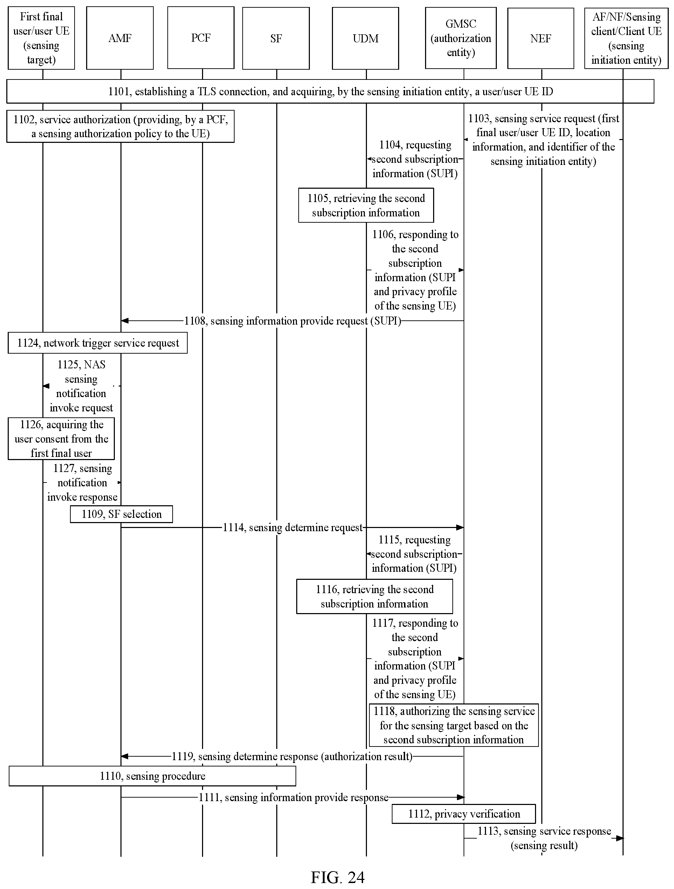

FIG. 24 shows a flowchart of a method for authorization according to some exemplary embodiments of the present disclosure. In the embodiments, the GMSC is used to authorize the sensing service for the sensing target. Different from FIG. 22, In the embodiments, S1107 is deleted, and S1124 to S1127 are added between S1108 and S1109. The method includes at least one of the following processes.

**In S1124,** the AMF and the user UE transmit a network trigger service request.

In some embodiments, the AMF establishes a NAS connection with the user UE for network communication.

In some embodiments, the authorization entity, such as a GMSC, a base station, a PCF, or an SF, establishes the connection with the user UE.

In some embodiments, the PCF establishes a NAS connection with the sensing UE for network communication.

In some embodiments, the GMSC establishes a user plane connection with the sensing UE for network communication.

In some embodiments, the base station establishes an access stratum connection with the sensing UE for network communication.

In some embodiments, the SF establishes a user plane connection or an application layer-based connection with the sensing UE for network communication.

In some embodiments, the connection established between the authorization entity and the user UE is also a user plane connection or an application layer-based connection, and the specific connection mode is related to the selection of the authorization entity. The embodiments of the present disclosure are not limited thereto.

**In S1125,** the AMF transmits a sensing notification invoke request to the user UE.

In some embodiments, the AMF transmits the sensing notification invoke request to the user UE through the NAS connection.

**In S1126,** the user UE acquires the user consent from the first user.

**In S1127,** the user UE transmits a sensing notification invoke response to the AMF.

In some embodiments, the user UE transmits a sensing notification invoke response to the AMF through the NAS connection.

**For a case where the sensing initiation entity is deployed in the AF/NF/sensing client/client UE, and the authorization entity is deployed in the AMF, the embodiments of the sixth implementation are as follows:**

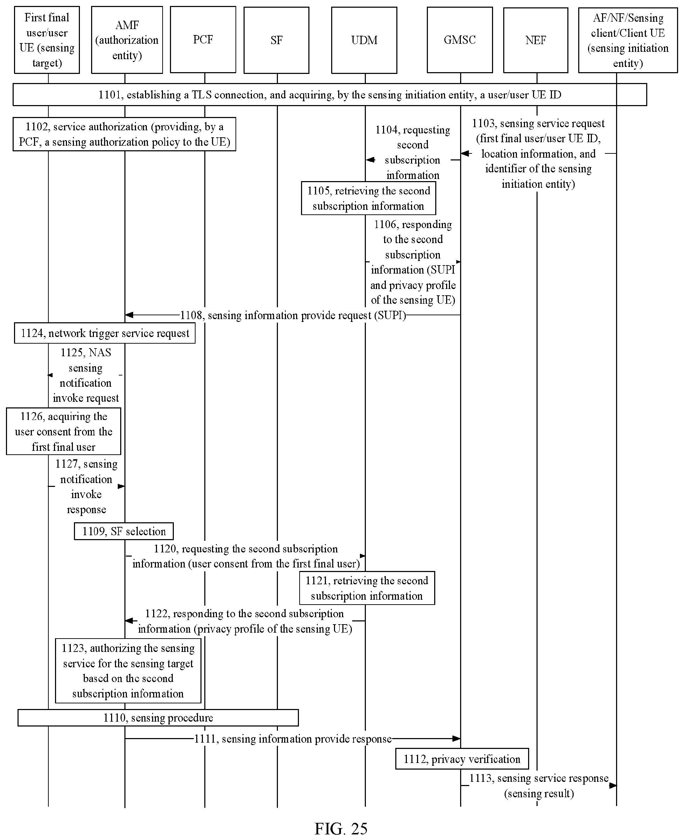

FIG. 25 shows a flowchart of a method for authorization according to some exemplary embodiments of the present disclosure. In the embodiments, the AMF is used to authorize the sensing node and the user UE. Different from FIG. 23, In the embodiments, S1107 is deleted, and S1124 to S1127 are added between S1108 and S1109. Specific steps are shown in the embodiments shown in FIG. 24.

**For a case where the sensing initiation entity is deployed in the AF/NF/sensing client/client UE, and the authorization entity is deployed in the GMSC, the embodiments of the fourth implementation are as follows:**

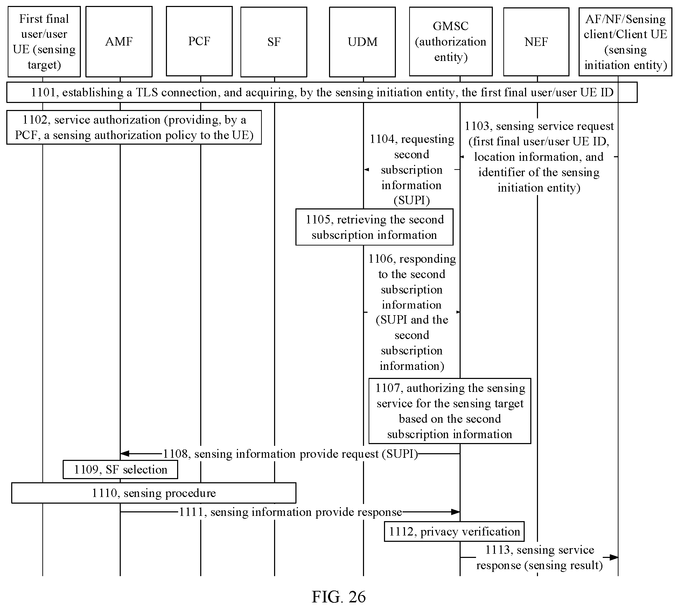

FIG. 26 shows a flowchart of a method for authorization according to some exemplary embodiments of the present disclosure. In the embodiments, the GMSC is used to authorize the sensing service for the sensing target. Different from FIG. 21, In the embodiments, S1105 and S1106 are extended, and the method includes at least one of the following processes.

**In S1105,** the UDM retrieves the second subscription information.

In some embodiments, the UDM retrieves a third privacy profile of the user UE based on the SUPI.

In some embodiments, the UDM retrieves the user consent from the first user based on the SUPI.

In some embodiments, the UDM retrieves, based on the SUPI, the third privacy profile of the user UE and the user consent from the first user.

**In S1106,** the UDM responds to the authorization entity with the second subscription information.

In some embodiments, the response message includes the SUPI and the third privacy profile of the user UE.

In some embodiments, the response message includes the SUPI and the user consent from the first user.

In some embodiments, the response message includes the SUPI, the user consent from the first user, and the third privacy profile of the user UE.

**For a case where the sensing initiation entity is deployed in the AF/NF/sensing client/client UE, and the authorization entity is deployed in the GMSC, the embodiments of the fourth implementation are as follows:**

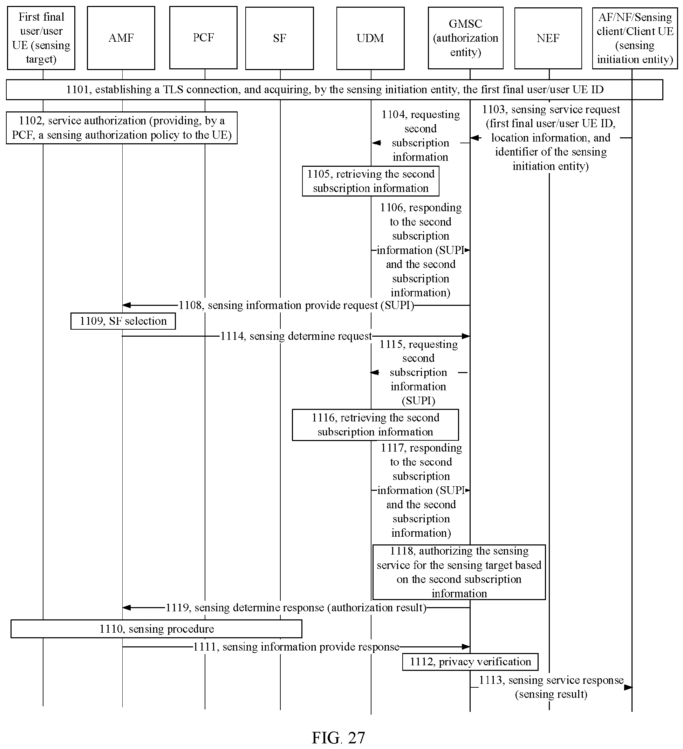

FIG. 27 shows a flowchart of a method for authorization according to some exemplary embodiments of the present disclosure. In the embodiments, the GMSC is used to authorize the sensing service for the sensing target. Different from FIG. 22, In the embodiments, S1105, S1106, S1116, and S1117 are extended, and the method includes at least one of the following processes.

**In S1105,** the UDM retrieves the second subscription information.

In some embodiments, the UDM retrieves a third privacy profile of the user UE based on the SUPI.

In some embodiments, the UDM retrieves the user consent from the first user based on the SUPI.

In some embodiments, the UDM retrieves, based on the SUPI, the third privacy profile of the user UE and the user consent from the first user.

**In S1106,** the UDM responds to the GMSC with second subscription information.

In some embodiments, the response message includes the SUPI and the third privacy profile of the user UE.

In some embodiments, the response message includes the SUPI and the user consent from the first user.

In some embodiments, the response message includes the SUPI, the user consent from the first user, and the third privacy profile of the user UE.

**In S1116,** the UDM retrieves the second subscription information.

In some embodiments, the UDM retrieves a third privacy profile of the user UE based on the SUPI.

In some embodiments, the UDM retrieves the user consent from the first user based on the SUPI.

In some embodiments, the UDM retrieves, based on the SUPI, the third privacy profile of the user UE and the user consent from the first user.

**In S1117,** the UDM responds to the GMSC with second subscription information.

In some embodiments, the response message includes the SUPI and the third privacy profile of the user UE.

In some embodiments, the response message includes the SUPI and the user consent from the first user.

In some embodiments, the response message includes the SUPI, the user consent from the first user, and the third privacy profile of the user UE.

**For a case where the sensing initiation entity is deployed in the AF/NF/sensing client/client UE, and the authorization entity is deployed in the AMF, the embodiments of the fourth implementation are as follows:**

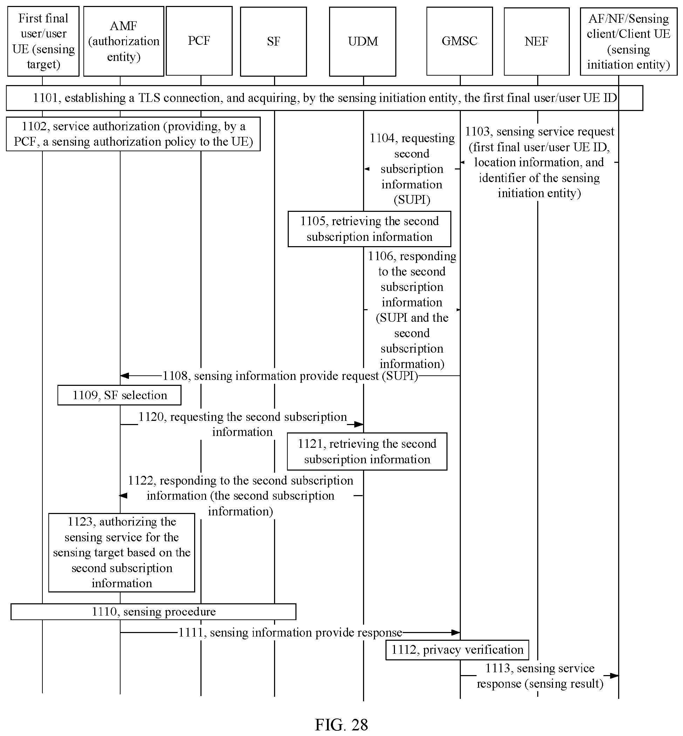

FIG. 28 shows a flowchart of a method for authorization according to some exemplary embodiments of the present disclosure. In the embodiments, the AMF is used to authorize the sensing service for the sensing target. Different from FIG. 23, In the embodiments, S1105, S1106, S1121, and S1122 are extended, and the method includes at least one of the following processes.

**In S1105,** the UDM retrieves the second subscription information.

In some embodiments, the UDM retrieves a third privacy profile of the user UE based on the SUPI.

In some embodiments, the UDM retrieves the user consent from the first user based on the SUPI.

In some embodiments, the UDM retrieves, based on the SUPI, the third privacy profile of the user UE and the user consent from the first user.

**In S1106,** the UDM responds to the AMF with second subscription information.

In some embodiments, the response message includes the SUPI and the third privacy profile of the user UE.

In some embodiments, the response message includes the SUPI and the user consent from the first user.

In some embodiments, the response message includes the SUPI, the user consent from the first user, and the third privacy profile of the user UE.

**In S1121,** the UDM retrieves the second subscription information.

In some embodiments, the UDM retrieves a third privacy profile of the user UE based on the SUPI.

In some embodiments, the UDM retrieves the user consent from the first user based on the SUPI.

In some embodiments, the UDM retrieves, based on the SUPI, the third privacy profile of the user UE and the user consent from the first user.

**In S1122,** the UDM responds to the AMF with second subscription information.

In some embodiments, the response message includes the SUPI and the third privacy profile of the user UE.

In some embodiments, the response message includes the SUPI and the user consent from the first user.

In some embodiments, the response message includes the SUPI, the user consent from the first user, and the third privacy profile of the user UE.

**In the case where the sensing initiation entity is deployed in the user UE, it is considered that the user consent is acquired, and there is no need to authorize the sensing initiation node.**
**III. Authorization of the sensing service for the sensing target in the case where the sensing target is a region;**
**for a case where the sensing initiation entity is deployed in the AF/NF/sensing client/client UE, and the authorization entity is deployed in the GMSC, the embodiments of the fourth implementation are as follows:**

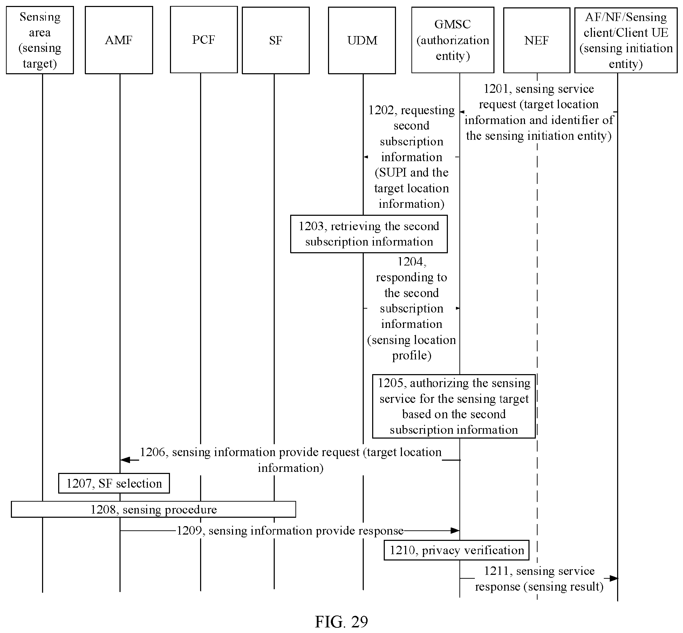

FIG. 29 shows a flowchart of a method for authorization according to some exemplary embodiments of the present disclosure. In the embodiments, the GMSC is used to authorize the sensing service for the sensing target. The method includes at least one of the following processes.

**In S1201,** the sensing initiation entity transmits a sensing service request to the GMSC.

In some embodiments, the AF/NF/sensing client/client UE transmits a sensing service request to the GMSC.

In some embodiments, the AF/NF/sensing client/client UE transmits a sensing service request to the GMSC through the NEF.

In some embodiments, the sensing service request at least includes: target location information (Target location info). In some embodiments, the sensing service request further includes at least one of the following parameters:
- a sensing initiation entity identifier, used to indicate a unique identifier of the sensing initiation entity, and each sensing initiation entity has a corresponding sensing initiation entity identifier; or
- a service type, related to the sensing content, and different service types are present based on different sensing content, for example, a first service type used to sense whether a moving target is present in an environment, a second service type used to sense a breathing frequency of a human body, a third service type used to sense a heartbeat rate of a human body, a fourth service type used to sense a posture of a human body, a fifth service type used to sense a UAV, and the like.

**In S1202,** the GMSC requests the UDM to acquire second subscription information.

In some embodiments, the request message includes the target location information.

In some embodiments, the request message includes the target location information and the SUPI, and the SUPI is an identifier of the second user.

**In S1203,** the UDM retrieves the second subscription information.

In some embodiments, the UDM retrieves the sensing location profile based on the target location information.

**In S1204,** the UDM responds to the GMSC with second subscription information.

In some embodiments, the response message includes the sensing location profile.

**In S1205,** the GMSC authorizes a sensing service for the sensing target based on the second subscription information.

In some embodiments, the GMSC authorizes the sensing service for the sensing target based on the sensing location profile.

In some embodiments, the GMSC determines, based on the sensing location profile, whether the sensing initiation entity is authorized to sense the sensing area, and authorizes the sensing service for the sensing target.

**In S1206,** the GMSC transmits a sensing information provide request to the AMF.

In some embodiments, the request message includes the target location information.

**In S1207,** the AMF selects a sensing network element SF.

**In S1208,** a sensing procedure is performed.

In some embodiments, the 5GC and the sensing node perform a sensing procedure for the sensing area.

In some embodiments, the 5GC is at least one of:
AMF;
PCF; or
SF.

**In S1209,** the AMF transmits a sensing information provide response to the GMSC.

**In S1210,** the GMSC performs a privacy verification.

In some embodiments, the GMSC transmits the sensing result to the sensing initiation entity in the case of acquiring the user consent from the second user.

**In S1211,** the GMSC exposes sensing information to the sensing initiation entity.

In some embodiments, information of the sensing area in sensing information is anonymized.

In some embodiments, S1210 and S1211 are optional.

**For a case where the sensing initiation entity is deployed in the AF/NF/sensing client/client UE, and the authorization entity is deployed in the AMF, the embodiments of the fourth implementation are as follows:**

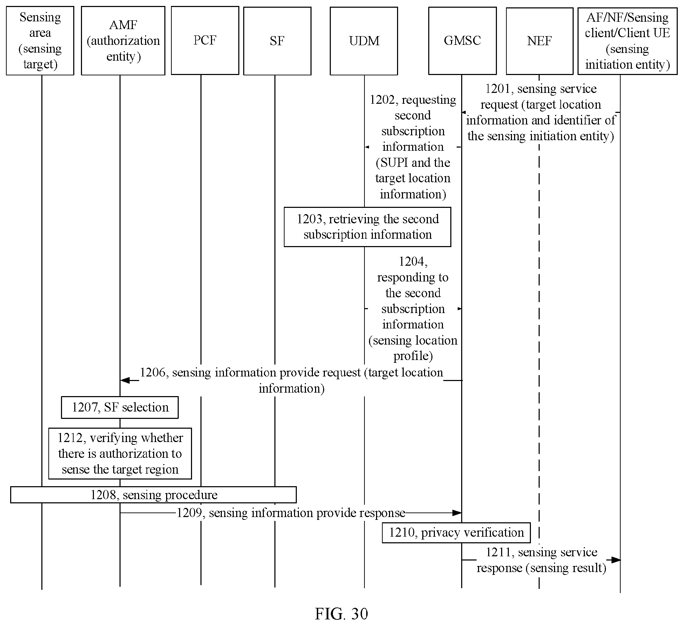

FIG. 30 shows a flowchart of a method for authorization according to some exemplary embodiments of the present disclosure. In the embodiments, the AMF is used to authorize the sensing service for the sensing target. On the basis of the embodiments corresponding to FIG. 29, S 1205 is deleted, and S1212 is added between S1207 and S1208.

**In S1212,** the AMF checks whether it is authorized to sense the target region.

In some embodiments, the AMF determines, based on the configuration of the AMF and the target location information, whether the sensing initiation entity is authorized to sense the target region, and authorizes the sensing service for the sensing target.

**For a case where the sensing initiation entity is deployed in the AF/NF/sensing client/client UE, and the authorization entity is deployed in the GMSC, the embodiments of the fourth implementation are as follows:**

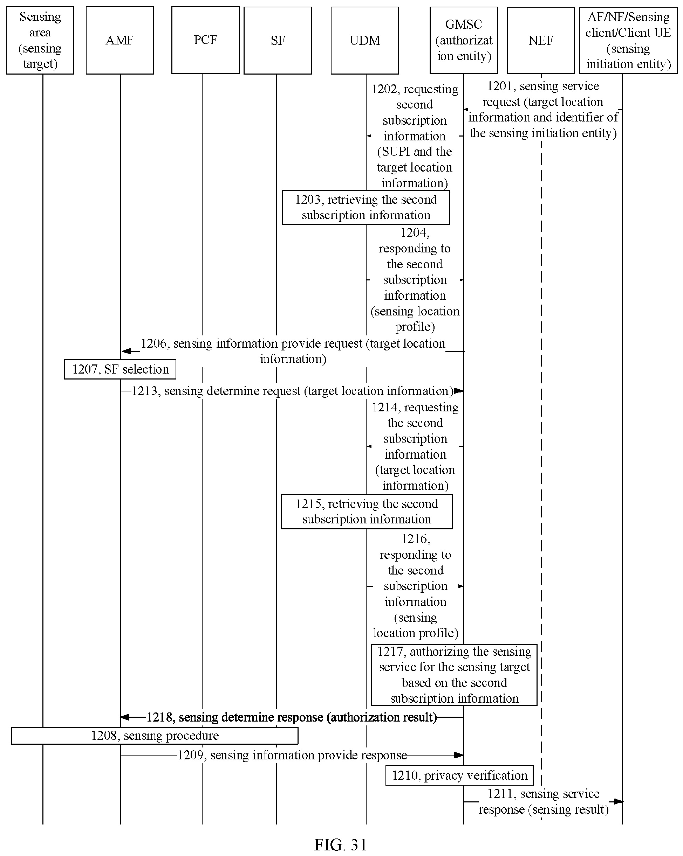

FIG. 31 shows a flowchart of a method for authorization according to some exemplary embodiments of the present disclosure. In the embodiments, the GMSC is used to authorize the sensing service for the sensing target. On the basis of the embodiments corresponding to FIG. 29, S1205 is deleted, and S1213 to S1218 are added between S1207 and S1208.

**In S1213,** the AMF transmits a sensing determine request to the authorization entity.

**In S1214,** the GMSC requests second subscription information from the UDM.

In some embodiments, the request message includes the target location information.

**In S1215,** the UDM retrieves the second subscription information.

In some embodiments, the UDM retrieves the sensing location profile based on the target location information.

**In S1216,** the UDM responds to the GMSC with second subscription information.

In some embodiments, the response message includes the sensing location profile.

**In S1217,** the authorization entity authorizes the sensing service for the sensing target based on the second subscription information.

In some embodiments, the authorization entity authorizes the sensing service for the sensing target based on the sensing location profile acquired from the UDM.

In some embodiments, the authorization entity authorizes the sensing service for the sensing target based on the user consent from the second user acquired from the UDM.

In some embodiments, the authorization entity authorizes the sensing service for the sensing target based on the sensing location profile acquired from the UDM and the user consent from the second user.

**In S1218,** the authorization entity initiates a sensing determine response to the AMF.

**For a case where the sensing initiation entity is deployed in the AF/NF/sensing client/client UE, and the authorization entity is deployed in the AMF, the embodiments of the fourth implementation are as follows:**

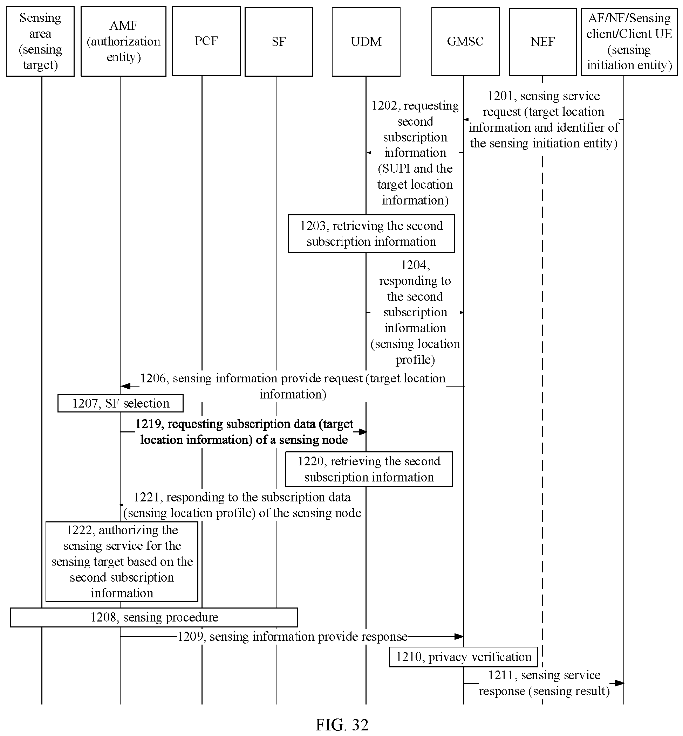

FIG. 32 shows a flowchart of a method for authorization according to some exemplary embodiments of the present disclosure. In the embodiments, the AMF is used to authorize the sensing service for the sensing target. On the basis of the embodiments corresponding to FIG. 29, S1205 is deleted, and S1219 to S1222 are added between S1207 and S1208.

**In S1219,** the AMF requests second subscription information from the UDM.

In some embodiments, the request message includes the target location information.

**In S1220,** the UDM retrieves the second subscription information.

In some embodiments, the UDM retrieves the sensing location profile based on the target location information.

**In S1221,** the UDM responds to the AMF with second subscription information.

In some embodiments, the response message includes the sensing location profile.

**In S1222,** the authorization entity authorizes the sensing service for the sensing target based on the second subscription information.

In some embodiments, the authorization entity authorizes the sensing service for the sensing target based on the sensing location profile acquired from the UDM.

In some embodiments, the authorization entity authorizes the sensing service for the sensing target based on the user consent from the second user acquired from the UDM.

In some embodiments, the authorization entity authorizes the sensing service for the sensing target based on the sensing location profile acquired from the UDM and the user consent from the second user.

**In the case where the sensing initiation entity is deployed in the sensing area, it is considered that the user consent is acquired, and there is no need to authorize the sensing initiation node.**

**IV. Authorization of the sensing service for the sensing target in the case where the sensing target is an object;**
**the sensing target is an object, and the authorization entity may refer to the sensing area during authorization, and authorize the sensing service for the sensing target based on a sensing object profile of the sensing object.**

**In the case where the sensing initiation entity is deployed in the sensing object, it is considered that the user consent is acquired, and there is no need to authorize the sensing initiation node.**

### V. Authorization for the sensing node;

**For a case where the sensing initiation entity is deployed in the AF/NF/sensing client/client UE, and the authorization entity is deployed in the GMSC, the embodiments of the first implementation are as follows:**

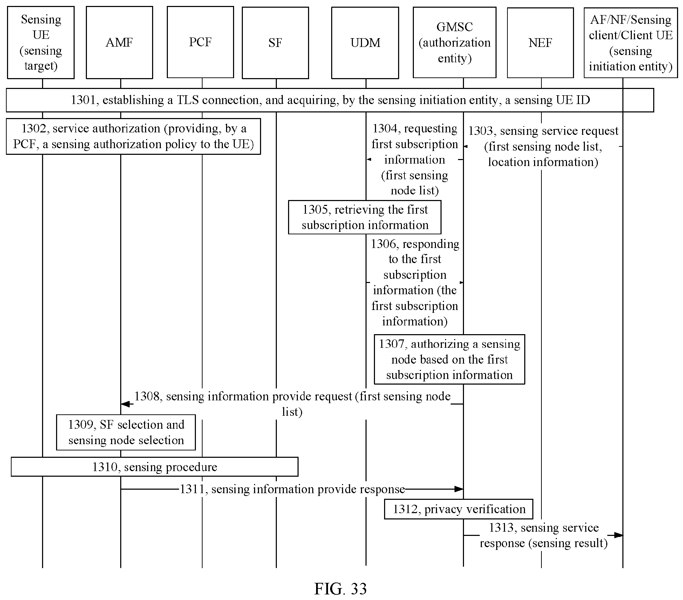

FIG. 33 shows a flowchart of a method for authorization according to some exemplary embodiments of the present disclosure. In the embodiments, the GMSC is used for the sensing node. The method includes at least one of the following processes.

**In S1301,** the sensing initiation entity establishes a TLS connection with a sensing UE.

The sensing initiation entity is configured to initiate a sensing service for the sensing UE. In some embodiments, in the case where the sensing initiation entity initiates a sensing request, the sensing initiation entity transmits a first sensing node list. The first sensing node list is a list of at least one candidate sensing node requested or recommended by the sensing initiation entity for the current sensing. The first sensing node list is used to indicate at least one sensing node. Exemplarily, the first sensing node list carries an identifier of at least one sensing node.

The sensing initiation entity directly or indirectly provides the first sensing node list to the authorization entity. In some embodiments, the sensing initiation entity provides the first sensing node list to the authorization entity through one or more core network elements. For example, the sensing initiation entity first provides the first sensing node list to the UDM, and then the UDM provides the first sensing node list to the authorization entity.

**In S1302,** service authorization is performed between the sensing UE and the PCF.

In some embodiments, the PCF generates an authorization policy through the subscription information of the sensing UE, and configures the authorization policy for the sensing UE.

In some embodiments, the PCF generates the authorization policy through the second privacy profile of the sensing UE and the user consent that is provided by the sensing initiation entity, and configures the authorization policy for the sensing UE.

In some embodiments, the UE declares its role to the network side. For example, the UE declares that the UE is a sensing target UE, the PCF generates the authorization policy after the PCF checks the second privacy profile of the sensing UE, and configures the authorization policy for the sensing UE.

In some embodiments, the UE declares its role to the network side. For example, the UE declares that it is a sensing target UE, and the PCF generates and configures the authorization policy for the sensing UE after checking the second privacy profile of the sensing UE and the user consent that is provided by the sensing initiation entity.

**In S1303,** the sensing initiation entity transmits a sensing service request to the authorization entity.

In some embodiments, the AF/NF/sensing client/client UE transmits a sensing service request to the GMSC.

In some embodiments, the AF/NF/sensing client/client UE transmits a sensing service request to the GMSC through the NEF.

In some embodiments, the sensing service request at least includes a first sensing node list. In some embodiments, the sensing service request further includes at least one of the following parameters:
- a sensing initiation entity identifier, used to indicate a unique identifier of the sensing initiation entity, and each sensing initiation entity has a corresponding sensing initiation entity identifier;
- location information, used to indicate region information that the sensing UE is allowed to be sensed, and including specific or specified sensing location information; or
- a service type, related to the sensing content, and different service types are present based on different sensing content, for example, a first service type used to sense whether a moving target is present in an environment, a second service type used to sense a breathing frequency of a human body, a third service type used to sense a heartbeat rate of a human body, a fourth service type used to sense a posture of a human body, a fifth service type used to sense a UAV, and the like.

**In S1304,** the authorization entity requests first subscription information (Nudm_SDM_GET Request) from the UDM.

In some embodiments, the request message includes a first sensing node list.

**In S1305,** the UDM retrieves the first subscription information.

In some embodiments, the UDM retrieves, based on the first sensing node list, the first privacy profile of the sensing node in the first sensing node list.

In some embodiments, the UDM retrieves, based on the first sensing node list, the user consent from the first subscriber of the sensing node in the first sensing node list.

In some embodiments, the UDM retrieves, based on the first sensing node list, the first privacy profile of the sensing node in the first sensing node list and the user consent from the first subscriber.

**In S1306,** the UDM responds to the authorization entity with first subscription information (Nudm_SDM_GET Response).

In some embodiments, the response message includes the first privacy profile of the sensing node in the first sensing node list.

**In S1307,** the authorization entity authorizes the sensing node based on the first subscription information.

In some embodiments, the authorization entity authorizes the sensing node based on the first privacy profile of the sensing node in the first sensing node list acquired from the UDM.

**In S1308,** the authorization entity transmits a sensing information provide request to the AMF.

In some embodiments, the sensing information provide request carries a first sensing node list.

**In S1309,** the AMF performs SF selection and sensing node selection.

In some embodiments, the AMF autonomously selects the sensing node based on the location information.

In some embodiments, the AMF selects at least one sensing node based on the first sensing node list to generate the second sensing node list.

**In S1310,** a sensing procedure is performed.

In some embodiments, the 5GC and the sensing node perform a sensing procedure for the sensing UE.

In some embodiments, the 5GC includes at least one of the following network elements:
AMF;
PCF; or
SF.

**In S1311,** the AMF transmits a sensing information provide response to the GMSC.

The sensing information provide response carries the sensing result. The sensing result is acquired based on sensing measurement of one or more sensing nodes.

**In S1312,** the GMSC performs a privacy verification.

In some embodiments, the GMSC transmits the sensing result to the sensing initiation entity in the case of acquiring the user consent corresponding to the sensing UE.

**In S1313,** the GMSC transmits a sensing service response to the sensing initiation entity.

In some embodiments, the information of the sensing UE in the sensing result is anonymized.

In some embodiments, S1312 and S1313 are optional.

**For a case where the sensing initiation entity is deployed in the AF/NF/sensing client/client UE, the authorization entity is deployed in the GMSC, and the sensing node selection entity is deployed in the AMF, the embodiments of the second implementation are as follows:**

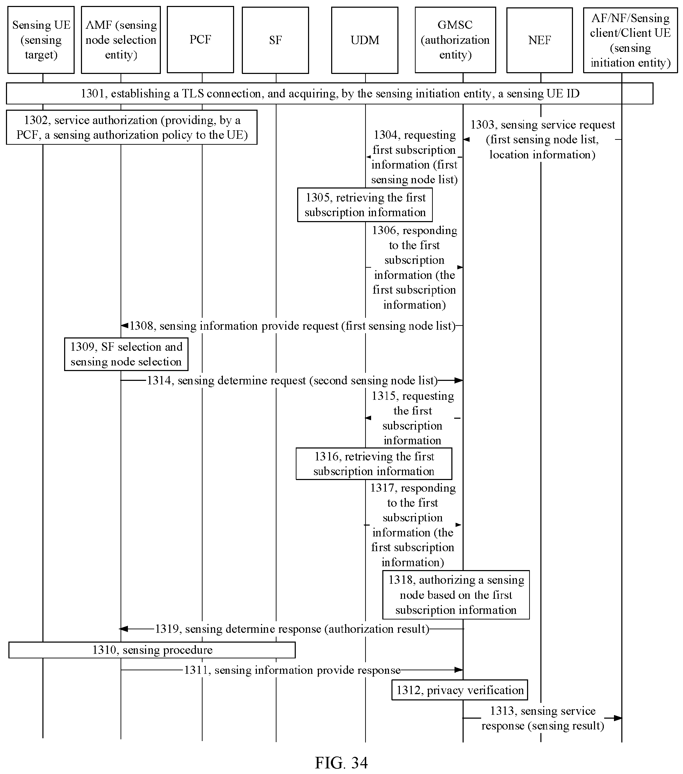

FIG. 34 shows a flowchart of a method for authorization according to some exemplary embodiments of the present disclosure. In the embodiments, the GMSC is used to authorize the sensing node. Different from FIG. 29, In the embodiments, S1307 is deleted, and S1314 to S1319 are added between S 1309 and S1310. The method includes at least one of the following processes.

**In S1314,** the AMF transmits a sensing determine request to the authorization entity.

**In S1315,** the authorization entity requests the first subscription information from the UDM.

In some embodiments, the request message includes a second sensing node list.

**In S1316,** the UDM retrieves the first subscription information.

In some embodiments, the UDM retrieves, based on the second sensing node list, a first privacy profile of a sensing node in the second sensing node list.

In some embodiments, the UDM retrieves, based on the second sensing node list, user consent from a first subscriber of the sensing node in the second sensing node list.

In some embodiments, the UDM retrieves, based on the second sensing node list, the first privacy profile and the user consent from the first subscriber of the sensing node in the second sensing node list.

**In S1317,** the UDM responds to the authorization entity with the first subscription information.

In some embodiments, the response message includes the first privacy profile of the sensing node in the second sensing node list.

In some embodiments, the response message includes the user consent from the first subscriber of the sensing node in the second sensing node list.

In some embodiments, the response message includes the first privacy profile and the user consent from the first subscriber of the sensing node in the second sensing node list.

**In S1318,** the authorization entity authorizes the sensing node based on the first subscription information.

In some embodiments, the authorization entity authorizes the sensing node based on the first privacy profile of the sensing node in the second sensing node list acquired from the UDM.

**In S1319,** the authorization entity initiates a sensing determine response to the AMF.

The sensing determine response carries a sensing result. The sensing result is acquired based on sensing measurement of one or more sensing nodes.

**For a case where the sensing initiation entity is deployed in an AF/NF/sensing client/client UE, and the authorization entity and the sensing node selection entity are deployed in an AMF, the embodiments of the third implementation are as follows:**

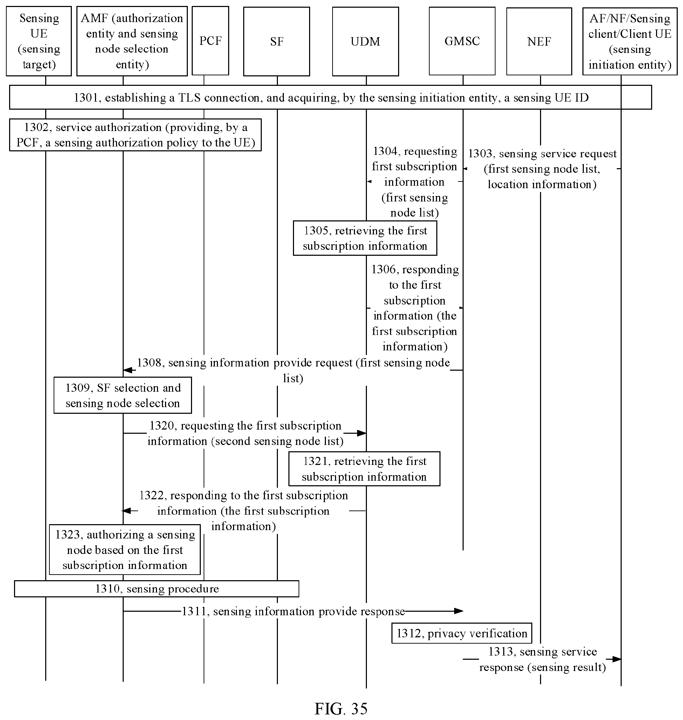

FIG. 35 shows a flowchart of a method for authorization according to some exemplary embodiments of the present disclosure. In the embodiments, the AMF is used to authorize the sensing node. Different from FIG. 29, In the embodiments, S1307 is deleted, and S1320 to S1323 are added between S 1309 and S1310. The method includes at least one of the following processes.

**In S1320,** the authorization entity requests first subscription information from a UDM.

In some embodiments, the request message includes a second sensing node list.

**In S1321,** the UDM retrieves the first subscription information.

In some embodiments, the UDM retrieves, based on the second sensing node list, a first privacy profile of a sensing node in the second sensing node list.

In some embodiments, the UDM retrieves, based on the second sensing node list, user consent from a first subscriber of the sensing node in the second sensing node list.

In some embodiments, the UDM retrieves, based on the second sensing node list, the first privacy profile and the user consent from the first subscriber of the sensing node in the second sensing node list.

**In S1322,** the UDM responds to the authorization entity with the first subscription information.

In some embodiments, the response message includes the first privacy profile of the sensing node in the second sensing node list.

In some embodiments, the response message includes the user consent from the first subscriber of the sensing node in the second sensing node list.

In some embodiments, the response message includes the first privacy profile and the user consent from the first subscriber of the sensing node in the second sensing node list.

**In S1323,** the authorization entity authorizes the sensing node based on the first subscription information.

In some embodiments, the authorization entity authorizes the sensing node based on the first privacy profile of the sensing node in the second sensing node list acquired from the UDM.

In some embodiments, the authorization entity authorizes the sensing node based on the user consent from the first subscriber of the sensing node in the second sensing node list acquired from the UDM.

In some embodiments, the authorization entity authorizes the sensing node based on the first privacy profile and the user consent from the first subscriber of the sensing node in the second sensing node list acquired from the UDM.

**For a case where the sensing initiation entity is deployed in a sensing UE, the authorization entity is deployed in a GMSC, and the sensing node selection entity is deployed in an AMF, the embodiments of the second implementation are as follows:**

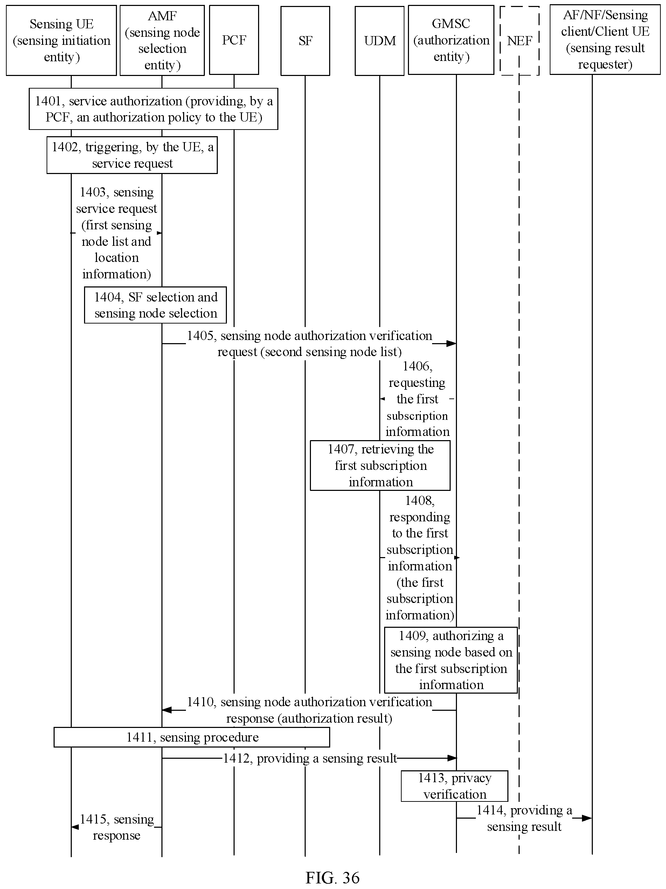

FIG. 36 shows a flowchart of a method for authorization according to some exemplary embodiments of the present disclosure. In the embodiments, the GMSC is used to authorize the sensing node. The method includes at least one of the following processes.

**In S1401,** service authorization is performed between the sensing UE and a PCF.

In some embodiments, the PCF generates an authorization policy through the subscription information of the sensing UE, and configures the authorization policy for the sensing UE.

In some embodiments, the PCF generates the authorization policy through a second privacy profile of the sensing UE, and configures the authorization policy for the sensing UE.

In some embodiments, the UE declares its role to the network side. For example, the UE declares that the UE is a sensing target UE, and the PCF generates the authorization policy after the PCF checks the second privacy profile of the sensing UE, and configures the authorization policy for the sensing UE.

**In S1402,** the sensing UE transmits a trigger service request to the AMF.

**In S1403,** the sensing UE initiates a sensing service request to the AMF.

In some embodiments, the sensing service request includes a first sensing node list. In some embodiments, the sensing service request further includes at least one of the following parameters:
- an identifier of the sensing initiation entity; or
- location information.

**In S1404,** the AMF selects a sensing network element SF for performing sensing node selection.

In some embodiments, the AMF selects a second sensing node list based on the first sensing node list and the location information of the sensing target.

In some embodiments, the AMF selects the second sensing node list based on the location information of the sensing target.

**In S1405,** the AMF transmits a sensing node authorization verification request to the authorization entity.

In some embodiments, the request message includes the second sensing node list.

In some embodiments, the request message includes a sensing node ID of a sensing node in the second sensing node list.

**In S1406,** the authorization entity requests first subscription information from a UDM.

In some embodiments, the GMSC requests the UDM to acquire the first subscription information. The request message includes the second sensing node list.

**In S1407,** the UDM retrieves the first subscription information.

In some embodiments, the UDM retrieves a first privacy profile of the sensing node in the second sensing node list.

In some embodiments, the UDM retrieves user consent from a first subscriber of the sensing node in the second sensing node list.

In some embodiments, the UDM retrieves the first privacy profile and the user consent from the first subscriber of the sensing node in the second sensing node list.

**In S1408,** the UDM responds to the authorization entity with the first subscription information.

In some embodiments, the UDM responds to the authorization entity with the first privacy profile of the sensing node in the second sensing node list.

In some embodiments, the UDM responds to the authorization entity with the user consent from the first subscriber of the sensing node in the second sensing node list.

In some embodiments, the UDM responds to the authorization entity with the first privacy profile and the user consent from the first subscriber of the sensing node in the second sensing node list.

**In S1409,** an authorization node authorizes the sensing node based on the first subscription information.

In some embodiments, the authorization node authorizes at least one sensing node based on the first privacy profile of the sensing node in the second sensing node list.

In some embodiments, the authorization node authorizes at least one sensing node based on the user consent from the first subscriber of the sensing node in the second sensing node list.

In some embodiments, the authorization node authorizes at least one sensing node based on the first privacy profile and the user consent from the first subscriber of the sensing node in the second sensing node list.

**In S1410,** the authorization entity transmits a sensing node authorization verification response to the AMF.

In some embodiments, the authorization entity transmits at least one authorized sensing node to the AMF.

In some embodiments, the response message includes an authorization result.

**In S1411,** a 5GC and the sensing node perform a sensing procedure for the sensing UE.

In some embodiments, the 5GC includes at least one of:
AMF;
PCF; or
SF.

**In S1412,** the AMF provides a sensing result to the GMSC.

**In S1413,** the GMSC performs a privacy verification.

In some embodiments, the GMSC transmits the sensing result to a sensing result requester in the case of acquiring user consent corresponding to the sensing UE.

**In S1414,** the GMSC provides the sensing result to the sensing result requester.

In some embodiments, information of the sensing UE in sensing information is anonymized.

**In S1415,** the AMF initiates a sensing response to the sensing UE.

The sensing response carries the sensing result. The sensing result is acquired based on sensing measurement of one or more sensing nodes.

In some embodiments, S1401, S1413, and S1414 are optional.

**For a case where the sensing initiation entity is deployed in a sensing UE, and the authorization entity and the sensing node selection entity are deployed in an AMF, the embodiments of the third implementation are as follows:**

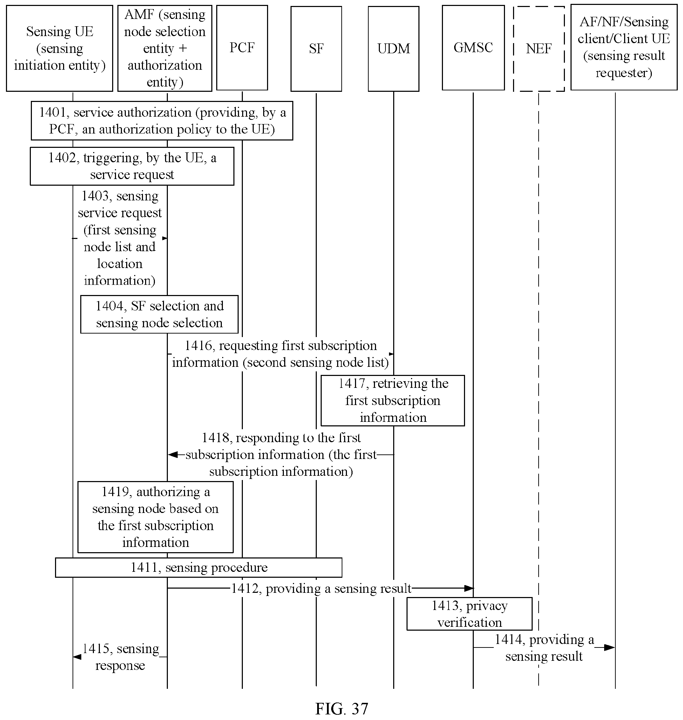

FIG. 37 shows a flowchart of a method for authorization according to some exemplary embodiments of the present disclosure. In the embodiments, the AMF is used to authorize the sensing node. Different from FIG. 32, In the embodiments, S1405 to S1410 are replaced with S1416 to S1419, and the method includes at least one of the following processes.

**In S1416,** the authorization entity requests first subscription information from a UDM.

In some embodiments, the request message includes a second sensing node list.

**In S1417,** the UDM retrieves the first subscription information.

In some embodiments, the UDM retrieves, based on the second sensing node list, a first privacy profile of a sensing node in the second sensing node list.

In some embodiments, the UDM retrieves, based on the second sensing node list, user consent from a first subscriber of the sensing node in the second sensing node list.

In some embodiments, the UDM retrieves, based on the second sensing node list, the first privacy profile and the user consent from the first subscriber of the sensing node in the second sensing node list.

**In S1418,** the UDM responds to the authorization entity with the first subscription information.

In some embodiments, the response message includes the first privacy profile of the sensing node in the second sensing node list.

In some embodiments, the response message includes the user consent from the first subscriber of the sensing node in the second sensing node list.

In some embodiments, the response message includes the first privacy profile and the user consent from the first subscriber of the sensing node in the second sensing node list.

**In S1419,** the authorization entity authorizes the sensing node based on the first subscription information.

In some embodiments, the authorization entity authorizes the sensing node based on the first privacy profile of the sensing node in the second sensing node list acquired from the UDM.

In some embodiments, an authorization node authorizes the sensing node based on the user consent from the first subscriber of the sensing node in the second sensing node list.

In some embodiments, the authorization node authorizes the sensing node based on the first privacy profile and the user consent from the first subscriber of the sensing node in the second sensing node list.

**The above I to IV are about authorization of a sensing service for a sensing target, and the above V is about authorization of a sensing node. Any method of I to IV and any method of V may be implemented as independent embodiments. The present disclosure is not limited thereto.**

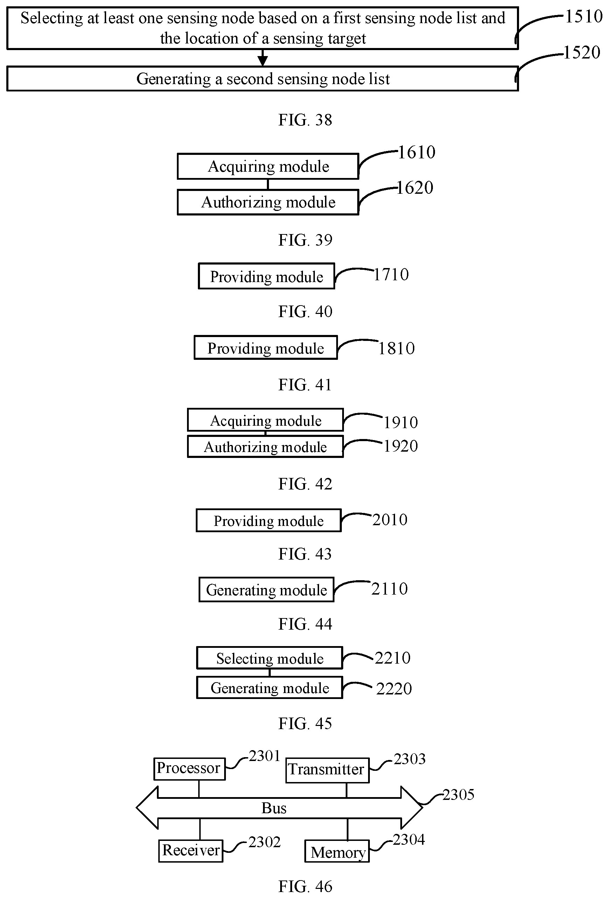

FIG. 38 shows a flowchart of a method for selecting a sensing node according to some exemplary embodiments of the present disclosure. The method includes at least one of the following processes.

**In S1510,** at least one sensing node is selected based on a first sensing node list and a location of a sensing target.

The first sensing node list is from a sensing initiation entity or a UDM.

In some embodiments, the first sensing node list is from the sensing initiation entity, and is a sensing node that the sensing initiation entity deems capable of assisting in completing the current sensing.

In some embodiments, the first sensing node list is from the UDM, and is a sensing node stored in the UDM and previously used for the same sensing initiation entity and sensing target.

**In S1520,** a second sensing node list is generated.

In some embodiments, the second sensing node list is selected based on the information of each sensing node and the information of the sensing target. The information of each sensing node includes at least one of the location of each sensing node or first subscription information of each sensing node. The information of the sensing target includes at least one of the location of the sensing target or first subscription information of the sensing target.

In some embodiments, the information for selecting the sensing node further includes at least one of electric quantity information, a quality of a communication link between the sensing node and the sensing target, a measurement result of a reference signal between the sensing node and the sensing target, a distance between the sensing node and the sensing target, or other information. The embodiments of the present disclosure are not limited thereto.

In some embodiments, the second sensing node list is generated based on the first sensing node list and the location of the sensing target,
the second sensing node list is a subset of the first sensing node list.

In some embodiments, the sensing node selection entity generates the second sensing node list based on the first sensing node list and the location of the sensing target. For example, the location of the sensing target is in region a, the sensing nodes in a first sensing node list {b, c, d} in region a are a sensing node b and a sensing node d, and the sensing node selection entity generates a second sensing node list {b, d}.

In some embodiments, the sensing node selection entity generates the second sensing node list based on the first sensing node list and assistance information such as a sensing target location, electric quantity, and a quality of a communication link.

In some embodiments, S1520 is optional.

In some embodiments, S1520 is implemented as an independent embodiment.

FIG. 39 shows a structural block diagram of an apparatus for authorization according to some exemplary embodiments of the present disclosure. The method includes at least some of the following content.

**An acquiring module 1610** is configured to acquire first subscription information of a sensing node.

In some embodiments, the acquiring module 1610 is configured to perform at least one of S210, S310, S320, S410, S420, S510, S520, or S530 in the above method embodiments.

In some embodiments, the acquiring module 1610 includes an acquiring submodule.

The acquiring submodule is configured to acquire the first subscription information of the sensing node from a UDM.

In some embodiments, the acquiring submodule is configured to perform at least one of S320, S420, or S530 in the above method embodiments.

In some embodiments, the acquiring submodule includes a transmitting submodule and a receiving submodule.

A transmitting unit is configured to transmit an identifier of the sensing node to the UDM.

In some embodiments, the transmitting unit is configured to perform at least one of S320, S420, or S530 in the above method embodiments.

A receiving unit is configured to receive the first subscription information fed back by the UDM.

In some embodiments, the receiving unit is configured to perform at least one of S320, S420, or S530 in the above method embodiments.

In some embodiments, a receiving module is further included.

The receiving module is configured to receive a first sensing node list from a sensing initiation entity, wherein the first sensing node list is used to indicate at least one sensing node.

In some embodiments, the receiving module is configured to perform at least one of S310 or S510 in the above method embodiments.

In some embodiments, a receiving module is further included.

The receiving module is configured to receive a second sensing node list from a sensing node selection entity, wherein the second sensing node list is used to indicate at least one sensing node.

In some embodiments, the receiving module is configured to perform at least one of S410 in the above method embodiments.

In some embodiments, the receiving module further includes a transmitting submodule.

The transmitting submodule is configured to transmit an authorization result of the at least one sensing node to the sensing node selection entity.

In some embodiments, the transmitting submodule is configured to perform at least one of S440 in the above method embodiments.

In some embodiments, a selecting module is further included.

The selecting module is configured to select at least one sensing node.

In some embodiments, the selecting module is configured to perform at least one of S520 in the above method embodiments.

In some embodiments, the selecting module further includes a selecting submodule.

The selecting submodule is configured to select the at least one sensing node based on the first sensing node list and the location of a sensing target,
wherein the first sensing node list is from the sensing initiation entity or the UDM.

In some embodiments, the selecting submodule is configured to perform at least one of S520 in the above method embodiments.

In some embodiments, a transmitting module is further included.

The transmitting module is configured to transmit a sensing result to a sensing result requester, wherein information of a sensing target in the sensing result is anonymized.

**An authorizing module 1620** is configured to authorize the sensing node based on the first subscription information.

In some embodiments, the authorizing module 1620 is configured to perform at least one of S220, S330, S430, or S540 in the above method embodiments.

FIG. 40 shows a structural block diagram of an apparatus for initiating sensing according to some exemplary embodiments of the present disclosure. The method includes at least some of the following content.

**A providing module 1710** is configured to provide a first sensing node list to an authorization entity, wherein the first sensing node list is used to indicate at least one sensing node.

The authorization entity is configured to authorize a sensing node based on first subscription information of the sensing node.

In some embodiments, the providing module 1710 is configured to perform at least one of S510 in the above method embodiments.

In some embodiments, the providing module 1710 includes a providing submodule.

The providing submodule is configured to provide the first sensing node list to the authorization entity through a UDM.

In some embodiments, the providing submodule is configured to perform at least one of S510 in the above method embodiments.

FIG. 41 shows a structural block diagram of an apparatus for selecting a sensing node according to some exemplary embodiments of the present disclosure. The method includes at least some of the following content.

**A providing module 1810** is configured to provide a second sensing node list to the authorization entity, wherein the second sensing node list is used to indicate at least one sensing node.

The authorization entity is configured to authorize a sensing node based on first subscription information of the sensing node.

In some embodiments, the providing module 1810 is configured to perform at least one of S410 in the above method embodiments.

In some embodiments, a generating module is further included.

The generating module is configured to generate the second sensing node list.

In some embodiments, the generating module is configured to perform at least one of S520 in the above method embodiments.

In some embodiments, the generating module further includes a generating submodule.

The generating submodule is configured to generate the second sensing node list based on a first sensing node list and the location of a sensing target,
wherein the first sensing node list is from a sensing initiation entity or a UDM, and the second sensing node list is a subset of the first sensing node list.

In some embodiments, the generating submodule is configured to perform at least one of S520 in the above method embodiments.

In some embodiments, a receiving module is further included.

The receiving module is configured to receive an authorization result from at least one sensing node of the authorization entity.

In some embodiments, the receiving module is configured to perform at least one of S440 in the above method embodiments.

FIG. 42 shows a structural block diagram of an apparatus for authorization according to some exemplary embodiments of the present disclosure. The method includes at least some of the following content.

**An acquiring module 1910** is configured to acquire second subscription information of a sensing target.

In some embodiments, the acquiring module 1910 is configured to perform at least one of S610, S710, S810, S820, S910, or S920 in the above method embodiments.

In some embodiments, the acquiring module 1910 includes an acquiring submodule.

The acquiring submodule is configured to acquire the second subscription information of the sensing target from a UDM.

In some embodiments, the acquiring submodule is configured to perform at least one of S710, S820, or S920 in the above method embodiments.

In some embodiments, the acquiring submodule includes a transmitting unit and a receiving unit.

The transmitting unit is configured to transmit an identifier of the sensing target to the UDM.

In some embodiments, the transmitting unit is configured to perform at least one of S710, S820, or S920 in the above method embodiments.

The receiving unit is configured to receive the second subscription information fed back by the UDM.

In some embodiments, the receiving unit is configured to perform at least one of S710 in the above method embodiments.

In some embodiments, an acquiring module and a transmitting module are further included.

The acquiring module is configured to transmit a sensing result to a sensing result requester in response to acquiring user consent corresponding to the sensing target is.

The transmitting module is configured to transmit a sensing result to a sensing result requester, wherein information of a sensing target in the sensing result is anonymized.

**An authorizing module 1920** is configured to authorize a sensing service for the sensing target based on the second subscription information.

In some embodiments, the authorizing module 1920 is configured to perform at least one of S620, S720, S830, or S930 in the above method embodiments.

FIG. 43 shows a structural block diagram of an apparatus for initiating sensing according to some exemplary embodiments of the present disclosure. The method includes at least some of the following content.

**A providing module 2010** is configured to provide an identifier of a sensing target to an authorization entity, wherein the authorization entity is configured to authorize a sensing service for the sensing target based on second subscription information of the sensing target.

In some embodiments, the providing module 2010 is configured to perform at least one of S710, S820, or S920 in the above method embodiments.

FIG. 44 shows a structural block diagram of an apparatus for authorization verification based on sensing according to some exemplary embodiments of the present disclosure. The method includes at least some of the following content.

**A generating module 2110** is configured to generate an authorization policy for a sensing UE based on subscription information of the sensing UE.

FIG. 45 shows a structural block diagram of an apparatus for selecting a sensing node according to some exemplary embodiments of the present disclosure. The method includes at least some of the following content.

**A selecting module 2210** selects at least one sensing node based on a first sensing node list and the location of a sensing target.

In some embodiments, the selecting module 2210 is configured to perform at least one of S410, S520, or S1510 in the above method embodiments.

**A generating module 2220** generates a second sensing node list.

In some embodiments, the generating module 2220 is configured to perform at least one of S410, S520, or S1520 in the above method embodiments.

An order of the processes in the above method embodiments does not constitute a timing limitation between the above modules.

It should be noted that in the case where the apparatus according to the above embodiments implements the functions thereof, the division of the functional modules is merely exemplary. In practical applications, the above functions may be assigned to different functional modules according to actual needs, that is, the internal structure of the device may be divided into different functional modules to implement all or a part of the above functions.

With regard to the apparatus in the above embodiments, the specific manner in which each module performs the operation has been described in detail in the embodiments related to the method and will not be described in detail herein.

FIG. 46 shows a schematic structural diagram of a sensing device according to some embodiments of the present disclosure. The sensing device includes: a processor 2301, a receiver 2302, a transmitter 2303, a memory 2304, and a bus 2305.

The processor 2301 includes one or more processing cores, and the processor 2301 performs various functional applications and information processing by running software programs and modules.

The receiver 2302 and the transmitter 2303 may be implemented as one transceiver, and the transceiver may be a communication chip.

The memory 2304 is connected to the processor 2301 through the bus 2305. In some embodiments, the processor 2301 may be implemented as a first integrated circuit (IC) chip, and the processor 2301 and the memory 2304 may be jointly implemented as a second IC chip. The first chip or the second chip may be an application specific integrated circuit (ASIC) chip.

The memory 2304 may be configured to store at least one computer program, and the processor 2301 is configured to run the at least one computer program to implement the processes performed by the sensing system in the above method embodiments.

Furthermore, the memory 2304 may be implemented by any type of volatile or non-volatile storage device, or a combination thereof. Volatile or non-volatile storage devices include, but are not limited to: random-access memory (RAM), read-only memory (ROM), erasable programmable read-only memory (EPROM), electrically erasable programmable read-only memory (EEPROM), flash memory or other solid-state storage technologies, compact disc read-only memory (CD-ROM), digital video disc (DVD) or other optical storage, magnetic cassette, magnetic tape, magnetic disc storage, or other magnetic storage devices.

The embodiments of the present disclosure further provide a computer-readable storage medium, storing one or more computer programs. The one or more computer programs, when loaded and run by a processor of a multi-link device, cause the processor to perform the method for authorizing the sensing node, or the method for authorizing the sensing service, or the method for authorization verification based on sensing described above.

In some embodiments, the computer-readable storage medium includes: a ROM, a RAM, a solid state drive (SSD), an optical disk, or the like. The random-access memory includes resistance random access memory (ReRAM) and dynamic random access memory (DRAM).

The embodiments of the present disclosure further provide a chip including programmable logic circuitry and/or one or more program instructions. The chip, when running, is caused to perform the method for authorizing the sensing node, or the method for authorizing the sensing service, or the method for authorization verification based on sensing described above.

The embodiments of the present disclosure further provide a computer program product or computer program. The computer program product or computer program includes one or more computer instructions, wherein the one or more computer instructions are stored in the computer-readable storage medium. The one or more computer instructions, when loaded and executed by a processor of a multi-link device from the computer-readable storage medium, cause the processor to perform the method for authorizing the sensing node, or the method for authorizing the sensing service, or the method for authorization verification based on sensing described above.

It should be understood that the term "indicate" in the embodiments of the present disclosure means the direct indication, indirect indication, or an associated relationship. For example, A indicating B means that A directly indicates B, for example, B is acquired via A, A indirectly indicates B, for example, A indicates C and a B is acquired via C, A and B and associated.

In the description of the embodiments of the present disclosure, the term "corresponding" may indicate a direct or indirect correspondence between two items, or an association relationship between the two items, or a relationship between indication and being indicated, configuration and being configured, and the like.

The mentioned term "a plurality of" herein means two or more. The term "and/or" describes the association relationship between the associated objects, and indicates that three relationships may be present. For example, the phrase "A and/or B" means (A), (B), or (A and B). The symbol "/" generally indicates an "or" relationship between the associated objects.

In addition, serial numbers of the processes described herein only show an exemplary possible sequence of performing the processes. In some other embodiments, the processes may also be performed out of the numbering sequence. For example, two processes with different serial numbers are performed simultaneously, or two processes with different serial numbers are performed in reverse order to the illustrated sequence, which is not limited in the present disclosure.

Those skilled in the art should understand that in one or more of the above embodiments, the functions described in the embodiments of the present disclosure may be implemented in hardware, software, firmware, or any combination thereof. The functions, when implemented in software, may be stored in a computer-readable medium or transmitted as one or more instructions or codes on a computer readable medium. The computer-readable medium includes a computer storage medium and a communication medium, where the communication medium includes any medium that facilitates the transfer of a computer program from one place to another. The storage medium is any available medium that is accessible by a general-purpose or special-purpose computer.

Described above are merely exemplary embodiments of the present disclosure and are not intended to limit the present disclosure. Any modifications, equivalent substitutions, improvements and the like, made within the spirit and principle of the present disclosure should fall within the protection scope of the present disclosure.

## Claims

1. A method for authorizing a sensing node, performed by an authorization entity, the method comprising:
acquiring first subscription information of the sensing node; and
authorizing the sensing node based on the first subscription information.

2. The method according to claim 1, wherein acquiring the first subscription information of the sensing node comprises:
acquiring the first subscription information of the sensing node from a unified data management function (UDM).

3. The method according to claim 2, wherein acquiring the first subscription information of the sensing node from the UDM comprises:
transmitting an identifier of the sensing node to the UDM; and
receiving the first subscription information fed back by the UDM.

4. The method according to claim 1, further comprising:
receiving a first sensing node list from a sensing initiation entity, wherein the first sensing node list is used to indicate at least one sensing node.

5. The method according to claim 4, wherein the sensing initiation entity is deployed in at least one of an application function (AF), a network function (NF), a sensing client, or a client user equipment (UE).

6. The method according to claim 1, further comprising:
receiving a second sensing node list from a sensing node selection entity, wherein the second sensing node list is used to indicate at least one sensing node.

7. The method according to claim 6, further comprising:
transmitting an authorization result of the at least one sensing node to the sensing node selection entity.

8. The method according to claim 7, wherein the sensing node selection entity is deployed in at least one of a service function (SF), an access and mobility management function (AMF), a policy control function (PCF), or an application function (AF).

9. The method according to claim 1, wherein the authorization entity further acts as a sensing node selection entity, and the method further comprises:
selecting at least one sensing node.

10. The method according to claim 9, wherein selecting the at least one sensing node comprises:
selecting the at least one sensing node based on a first sensing node list and a location of a sensing target, wherein the first sensing node list is from a sensing initiation entity or a unified data management function (UDM).

11. The method according to any one of claims 1 to 10, further comprising:
transmitting a sensing result to a sensing result requester, wherein information of a sensing target in the sensing result is anonymized.

12. The method according to any one of claims 1 to 10, wherein the authorization entity is deployed in any one of an access and mobility management function (AMF), a base station, a policy control function (PCF), a service function (SF), or a gateway mobile sensing center (GMSC).

13. The method according to any one of claims 1 to 10, wherein the first subscription information of the sensing node comprises at least one of:
user consent from a first subscriber, wherein the first subscriber is associated with the sensing node; or
a first privacy profile.

14. The method according to claim 13, wherein the first privacy profile comprises at least one of:
a service type;
a sensing-supported service type;
an identifier of the sensing initiation entity;
a role type; or
sensing-authorized location information.

15. A method for authorizing a sensing node, performed by a sensing initiation entity, the method comprising:
providing a first sensing node list to an authorization entity, wherein the first sensing node list is used to indicate at least one sensing node, and the authorization entity is configured to authorize the sensing node based on first subscription information of the sensing node.

16. The method according to claim 15, wherein providing the first sensing node list to the authorization entity comprises:
providing the first sensing node list to the authorization entity through a unified data management function (UDM).

17. The method according to claim 15, wherein the authorization entity is deployed in any one of an access and mobility management function (AMF), a base station, a policy control function (PCF), a service function (SF), or a gateway mobile sensing center (GMSC).

18. The method according to claim 15, wherein the sensing initiation entity is deployed in at least one of an application function (AF), a network function (NF), a sensing client, or a client user equipment (UE).

19. The method according to any one of claims 15 to 18, wherein the first subscription information comprises at least one of:
user consent from a first subscriber, wherein the first subscriber is associated with the sensing node; or
a first privacy profile.

20. The method according to claim 19, wherein the first privacy profile comprises at least one of:
a service type;
a sensing-supported service type;
an identifier of the sensing initiation entity;
a role type; or
sensing-authorized location information.

21. A method for authorizing a sensing node, performed by a sensing node selection entity, the method further comprising:
providing a second sensing node list to an authorization entity, wherein the second sensing node list is used to indicate at least one sensing node, and the authorization entity is configured to authorize the sensing node based on first subscription information of the sensing node.

22. The method according to claim 21, further comprising:
generating the second sensing node list.

23. The method according to claim 22, wherein generating the second sensing node list comprises:
generating the second sensing node list based on a first sensing node list and a location of a sensing target, wherein the first sensing node list is from a sensing initiation entity or a unified data management function (UDM), and the second sensing node list is a subset of the first sensing node list.

24. The method according to claim 21, further comprising:
receiving an authorization result of the at least one sensing node from the authorization entity.

25. The method according to any one of claims 21 to 24, wherein the first subscription information comprises at least one of:
user consent from a first subscriber, wherein the first subscriber is associated with the sensing node; or
a first privacy profile.

26. The method according to claim 25, wherein the first privacy profile comprises at least one of:
a service type;
a sensing-supported service type;
an identifier of the sensing initiation entity;
a role type; or
sensing-authorized location information.

27. A method for authorizing a sensing service, performed by an authorization entity, the method comprising:
acquiring second subscription information of a sensing target; and
authorizing a sensing service for the sensing target based on the second subscription information.

28. The method according to claim 27, wherein acquiring the second subscription information of the sensing target comprises:
acquiring the second subscription information of the sensing target from a unified data management function (UDM).

29. The method according to claim 28, wherein acquiring the second subscription information of the sensing target from the UDM comprises:
transmitting an identifier of the sensing target to the UDM; and
receiving the second subscription information fed back by the UDM.

30. The method according to any one of claims 27 to 29, further comprising:
transmitting a sensing result to a sensing result requester in response to acquiring user consent corresponding to the sensing target; and/or
transmitting a sensing result to a sensing result requester, wherein information of the sensing target in the sensing result is anonymized.

31. The method according to any one of claims 27 to 29, wherein the authorization entity is deployed in any one of an access and mobility management function (AMF), a base station, a policy control function (PCF), a service function (SF), or a gateway mobile sensing center (GMSC).

32. The method according to any one of claims 27 to 29, wherein the sensing target comprises at least one of:
a sensing user equipment (UE);
a first user; or
a sensing area.

33. The method according to claim 32, wherein the sensing target is the sensing UE; and
the second subscription information comprises at least one of:
user consent from a second subscriber, wherein the second subscriber is associated with the sensing UE; or
a second privacy profile.

34. The method according to claim 33, wherein the second privacy profile comprises at least one of:
a service type;
a sensed service type;
an identifier of a sensing initiation entity;
a sensing privacy indication;
a privacy type;
a role type; or
sensing location information.

35. The method according to claim 32, wherein the sensing target is the first user; and
the second subscription information comprises at least one of:
an identifier of the first user;
user consent from the first user; or
a third privacy profile.

36. The method according to claim 33, wherein the third privacy profile comprises at least one of:
a service type;
a sensed service type;
an identifier of a sensing initiation entity;
a sensing privacy indication;
a privacy type;
a role type; or
sensing location information.

37. The method according to claim 32, wherein the sensing target is the sensing area; and
the second subscription information comprises at least one of:
an identifier of a second user;
user consent from the second user, wherein the second user is associated with the sensing area; or
a sensing location profile.

38. The method according to claim 37, wherein the sensing location profile comprises at least one of:
a service type;
a sensed service type;
an identifier of a sensing initiation entity;
a sensing privacy indication; or
a privacy type.

39. The method according to any one of claims 33 to 38, wherein
the user consent is acquired through an application layer; or
the user consent is acquired by a connection between the authorization entity and the sensing target.

40. A method for authorizing a sensing service, performed by a sensing initiation entity, the method comprising:
providing an identifier of a sensing target to an authorization entity, wherein the authorization entity is configured to authorize a sensing service for the sensing target based on second subscription information of the sensing target.

41. The method according to claim 40, wherein the second subscription information comprises user consent corresponding to the sensing target; and the method further comprises:
acquiring the user consent; and
providing the user consent to the authorization entity.

42. The method according to claim 41, wherein providing the user consent to the authorization entity comprises:
providing the user consent to the authorization entity through a unified data management function (UDM).

43. The method according to any one of claims 40 to 41, wherein the sensing target comprises at least one of:
a sensing user equipment (UE);
a first user; or
a sensing area.

44. A method for authorization verification based on sensing, comprising:
generating an authorization policy for a sensing user equipment (UE) based on second subscription information of the sensing UE.

45. The method according to claim 44, wherein the second subscription information comprises at least one of:
user consent from a second subscriber, wherein the second subscriber is associated with the sensing UE; or
a second privacy profile.

46. The method according to claim 45, wherein the second privacy profile comprises at least one of:
a service type;
a sensed service type;
an identifier of a sensing initiation entity;
a sensing privacy indication;
a privacy type;
a role type; or
sensing location information.

47. The method according to any one of claims 44 to 46, wherein the authorization policy is used to indicate at least one of:
a first public land mobile network (PLMN) that allows the sensing UE to use a sensing service; or
a second PLMN that allows another UE to use a sensing service for the sensing UE.

48. An apparatus for authorization, comprising:
an acquiring module, configured to acquire first subscription information of a sensing node; and
an authorizing module, configured to authorize the sensing node based on the first subscription information.

49. An apparatus for initiating sensing, comprising:
a providing module, configured to provide a first sensing node list to an authorization entity, wherein the first sensing node list is used to indicate at least one sensing node, and the authorization entity is configured to authorize the at least one sensing node based on first subscription information of the at least one sensing node.

50. An apparatus for selecting a sensing node, comprising:
a providing module, configured to provide a second sensing node list to an authorization entity, wherein the second sensing node list is used to indicate at least one sensing node, and the authorization entity is configured to authorize the at least one sensing node based on first subscription information of the at least one sensing node.

51. An apparatus for authorization, comprising:
an acquiring module, configured to acquire second subscription information of a sensing target; and
an authorizing module, configured to authorize a sensing service for the sensing target based on the second subscription information.

52. An apparatus for initiating sensing, comprising:
a providing module, configured to provide an identifier of a sensing target to an authorization entity, wherein the authorization entity is configured to authorize a sensing service for the sensing target based on second subscription information of the sensing target.

53. An apparatus for authorization verification based on sensing, comprising:
a generating module, configured to generate an authorization policy for a sensing user equipment (UE) based on second subscription information of the sensing UE.

54. A sensing device, comprising: a processor and a memory storing one or more programs therein, wherein the sensing device is configured to load and run the one or more programs in the memory to perform the method for authorizing the sensing node as defined in any one of claims 1 to 26, or the method for authorizing the sensing service as defined in any one of claims 27 to 43, or the method for authorization verification based on sensing as defined in any one of claims 44 to 47.

55. A computer-readable storage medium, storing one or more computer programs therein, wherein the one or more computer programs, when loaded and run by a processor, cause the processor to perform the method for authorizing the sensing node as defined in any one of claims 1 to 26, or the method for authorizing the sensing service as defined in any one of claims 27 to 43, or the method for authorization verification based on sensing as defined in any one of claims 44 to 47.

56. A chip, comprising: programmable logic circuitry and/or one or more program instructions, wherein the chip, when running, is caused to perform the method for authorizing the sensing node as defined in any one of claims 1 to 26, or the method for authorizing the sensing service as defined in any one of claims 27 to 43, or the method for authorization verification based on sensing as defined in any one of claims 44 to 47.

57. A computer program product or a computer program, comprising: one or more computer instructions stored in a computer-readable storage medium, wherein a processor, when reading and executing the one or more computer instructions in the computer-readable storage medium, is caused to perform the method for authorizing the sensing node as defined in any one of claims 1 to 26, or the method for authorizing the sensing service as defined in any one of claims 27 to 43, or the method for authorization verification based on sensing as defined in any one of claims 44 to 47.
